# EUROPÄISCHE PATENTSCHRIFT

(11) **EP 1 638 866 B1**
(45) Veröffentlichungstag und Bekanntmachung des Hinweises auf die Patenterteilung: **11.10.2006**
(21) Anmeldenummer: 04737360.0
(22) Anmeldetag: 30.06.2004
(51) Int. Cl.: B65G 1/04

(54) **VERFAHREN UND VORRICHTUNG ZUR MANIPULATION VON LADEHILFSMITTELN**
METHOD AND DEVICE FOR MANIPULATING LOAD CONTAINERS
PROCEDE ET DISPOSITIF POUR MANIPULER DES AUXILIAIRES DE CHARGEMENT

(30) Priorität: 30.06.2003 AT 9972003
(43) Veröffentlichungstag der Anmeldung: 29.03.2006
(73) Patentinhaber: TGW Transportgeräte GmbH, 4600 Wels (AT)
(72) Erfinder: HANSL, Rudolf, A-4020 Linz (AT); SEHRSCHÖN, Harald, A-8020 Graz (AT)
(74) Vertreter: Secklehner, Günter
(86) Internationale Anmeldenummer: PCT/AT2004/000229
(87) Internationale Veröffentlichungsnummer: WO 2005/000718

(56) Entgegenhaltungen:
- DE-U- 20 012 197
- US-B1- 6 199 490

## Beschreibung

Die Erfindung betrifft eine Lastaufnahmevorrichtung, insbesondere zum Ein- und Auslagern von Ladehilfsmitteln in bzw. aus einem Regalfach eines Regallagers, ein Verfahren und eine Fördereinrichtung, wie in den Ansprüchen 1, 19 und 20 beschrieben.

Eine gattungsgemäße Lastaufnahmevorrichtung ist aus der DE 200 12 197 U1 bekannt, die einen feststehenden Grundrahmen und einen durch einen Zugmitteltrieb verschiebbar am Grundrahmen gelagerten Oberschlitten mit einem über ein Zugmittel antreibbares, umlaufendes Fördermittel sowie einen auf dem Grundrahmen verschiebbar gelagerten Koppelungsschlitten aufweist. Der Koppelungsschlitten ist mit einem Antriebsrad versehen, das mit einem, durch den am Grundrahmen angeordneten Zugmitteltrieb angetriebenen Rad verbunden ist, wobei der Durchmesser des Antriebsrades größer als der des Rades ist und durch die somit geschaffene Übersetzung von Rad und Antriebsrad, das Fördermittel ebenso schnell zurückgezogen wird wie der Oberschlitten ausfährt. Der Zugmitteltrieb ist als Endlosband ausgebildet und ist von einem Antrieb über zwei in Ausfahrrichtung des Oberschlittens an den Enden des Grundrahmens gelagerte Umlenkrollen und über das Rad des Mitnehmers geführt, wobei beidseitig zum Rad noch Umlenkrollen angeordnet sind. Das Zugmittel des Zugmitteltriebes ist vom größeren Antriebsrad über an den Enden des Oberschlittens gelagerte Umlenkrollen geführt und sind die beiden Enden des Zugmittels mit dem Koppelungsschlitten verbunden.

Aus der DE 298 15 784 U1 ist eine Lastaufnahmevorrichtung, insbesondere zum Ein- und Auslagern von Behältern in bzw. aus Regallagern bekannt, die einen mittels einem Verschiebeantrieb auf einem feststehenden Grundrahmen verschiebbar gelagerten Oberschlitten aufweist. Der Verschiebeantrieb ist durch einen Zugmitteltrieb gebildet. Der Oberschlitten ist mit einem Fördermittel für den zu transportierenden Behälter versehen. Das Fördermittel ist mit dem Zugmitteltrieb gekoppelt. Das Zugmittel dieses Zugmitteltriebes ist von einem am Grundrahmen angeordneten Antrieb über zwei Umlenkrollen des Grundrahmens unter Kreuzung über zwei Umlenkrollen des Oberschlittens geführt, sodass auf diese Weise das Fördermittel mit der gleichen Geschwindigkeit entgegen gesetzt zur Ein- bzw. Ausfahrrichtung des Oberschlittens bewegt wird.

Eine andere Ausführung einer Lastaufnahmevorrichtung ist aus der DE 42 05 856 A1 bekannt. Diese weist einen feststehenden Grundrahmen und über einen Verschiebeantrieb in Ein- bzw. Ausfahrrichtung synchron zueinander und relativ zum Grundrahmen verstellbare Koppelungs- und Oberschlitten sowie wenigstens ein am Oberschlitten gelagertes und mit einem Zugmitteltrieb gekoppeltes Fördermittel auf. Der am Grundrahmen befestigte Verschiebeantrieb für den Oberschlitten ist durch einen Zugmitteltrieb gebildet und weist ein Zugmittel auf, das von einem Antriebsrad über zwei ortsfest am Grundrahmen angeordnete Umlenkrollen geführt ist und sich überkreuzt und die beiden Enden des Zugmittels mit dem Oberschlitten verbunden sind. Der Fördermotor ist mit dem Antriebsrad gekoppelt und mittig am Koppelungsschlitten angeordnet.

Weiters ist aus der EP 0 655 048 B1 eine Lastaufnahmevorrichtung zum Ein- und Auslagern von Paletten in bzw. aus einem Regalfach eines Regallagers mit einem seitlich neben dem Regallager verfahrbaren Förderfahrzeug bekannt, die zwei getrennt voneinander angeordnete Trageinrichtungen für die Palette umfasst, die an einem gemeinsamen Grundrahmen gelagert sind und jeweils über einen ersten und zweiten Verschiebemotor relativ zum Grundrahmen verstellbare Koppelungsschlitten sowie wenigstens einen über einen dritten Verschiebemotor unabhängig von den beiden Koppelungsschlitten relativ zum Grundrahmen verstellbaren Oberschlitten aufweist. Der Grundrahmen ist mit der Hubplattform des Förderfahrzeuges ortsfest verbunden. Die dem Grundrahmen benachbarten ersten Koppelungsschlitten jeder Trageinrichtung sind mit dem ersten und zweiten Verschiebemotor versehen und ist jeweils ein Zahnrad und ein Kettenrad mit dem ersten und zweiten Verschiebemotor gekoppelt. Jedes Zahnrad kämmt mit einer jeweils am Grundrahmen befestigten Zahnstange, während um das Kettenrad eine Kette gelegt ist, die vom Kettenrad über in Ausfahrrichtung der Trageinrichtung an den Enden des ersten Koppelungsschlitten gelagerte Kettenräder geführt ist und sich überkreuzt und anschließend zu entgegengesetzt an den Enden des dem Oberschlitten benachbarten zweiten Koppelungsschlitten angeordneten Befestigungspunkten geführt ist und die beiden Enden der Kette mit dem zweiten Koppelungsschlitten fest verbunden sind. Der Durchmesser des Kettenrades ist größer als der des Zahnrades ausgebildet. Mit dem dritten Verschiebemotor sind zwei Kettenräder gekoppelt, wovon um ein jedes Kettenrad eine Kette gelegt und die Kette vom jeweiligen Kettenrad über in Ausfahrrichtung an den Enden des ersten Koppelungsschlitten gelagerte Umlenkrollen zu entgegengesetzt an den Enden des zweiten Koppelungsschlitten gelagerte Umlenkrollen geführt ist und die beiden Enden der Kette mit dem Oberschlitten verbunden sind.

Der DE 42 05 856 A1 und EP 0 655 048 B1 haftet der Nachteil an, dass bei der Ein- und Ausfahrbewegung des Koppelungs- und Oberschlittens der Förder- bzw. Verschiebemotor gemeinsam mit dem Koppelungsschlitten bewegt wird, was einerseits entsprechend höhere Antriebsleistungen des Verschiebemotors für die Verstellung des Koppelungs- und/oder Oberschlittens erfordert und andererseits, um eine ausreichende Steifigkeit vom Koppelungs-und Oberschlitten zu erreichen, die Querschnitte der in die Regalfächer einfahrenden Koppelungs- und Oberschlitten vergrößert werden müssen und dadurch das Verhältnis verfügbares Raumvolumen des Lagerraumes zu Lagervolumen des Regallagers erheblich gesenkt wird.

Eine Lastaufnahmevorrichtung gemäß Oberbegriff der Ansprüche 1, 19, 20 ist aus der US 6,199,490 B1 bekannt.

Bei den vorgenannten Lastaufnahmevorrichtungen ist das Fördermittel über ein Zugmittel angetrieben, das von einem Antrieb am Grundrahmen über eine am Koppelungsschlitten angeordnete Umlenkrolle bzw. ein Antriebsrad zu einer am Oberschlitten angeordnete Umlenkrolle geführt und mit dem Fördermittel gekoppelt ist. Werden der Koppelungs- und Oberschlitten in Ausfahrrichtung relativ zueinander verstellt, bewegen sich die Umlenkrolle vom Oberschlitten und die Umlenkrolle bzw. das Antriebsrad vom Koppelungsschlitten soweit aufeinander zu, dass sie gerade nicht einander kollidieren. Aufgrund der Anordnung von Antriebsrad, Umlenkrollen für das Zugmittel, kann der Oberschlitten nach beide Richtungen nur um eine durch den vom Durchmesser des Antriebsrades und der Umlenkrolle sowie der Beabstandung zwischen Antriebsrad und Umlenkrollen definierten Anordnungsbereich reduzierte maximale Ausschublänge ausgefahren werden, sodass zwangsweise bei vollem Auszug des Oberschlittens eine Mindestüberlappung zwischen dem Oberschlitten und Grundrahmen ausgebildet ist. Diese Mindestüberlappung führt nun dazu, dass die maximal mögliche Ausfahrlänge der in das Regalfach einfahrbaren Trageinrichtung verkürzt wird und bei zweifach tiefer Einlagerungsmöglichkeit im Regallager der am gassenfernen Abstellplatz abgelegte Behälter nicht vollständig unterfahren werden kann und deshalb der Schwerpunkt des abgelegten Behälters im Nahbereich der in Ausfahrrichtung vorderen Stirnseite des Fördermittels am unterhalb des Behälters eingefahrenen Oberschlitten oder nicht am Fördermittel des unterhalb des Behälters eingefahrenen Oberschlittens liegt. Ersteres führt dazu, dass der ausge-fahrene Oberschlitten beim Auslagern nur mit niedrigen Beschleunigungswerten wieder eingefahren werden kann und der Behälter leicht vom Fördermittel kippt. Zweites führt dazu, dass der Behälter nicht aus dem Regalfach entnommen werden kann, da der für die Förderung des Behälters vom Abstellplatz auf das Fördermittel erforderliche Reibschluss zwischen der Unterseite des Behälters und der Auflagefläche des Fördermittels zu gering ist. Um diesem Nachteil entgegen zu wirken, ist es erforderlich, den Grundrahmen, Koppelungs-und/oder Oberschlitten um die Länge der Mindestüberlappung größer auszubilden, was zu einer Verbreitung der Regalgasse führt und deshalb nur ein niedriger Raumausnutzungsgrad eines Lagerraumes erreicht werden kann.

Eine weitere Ausbildung einer gattungsgemäßen Lastaufnalunevorrichtung und ein Verfahren zum Ein- und Auslagern von Behältern in ein bzw. aus einem Regalfach eines Regallagers ist aus der DE 198 01 856 C2 bekannt. Die Lastaufnahmevorrichtung umfasst eine Trageinrichtung mit einem umlaufenden, antreibbaren Fördermittel, das beim Auslagern eines Behälters aus dem Regalfach unterhalb des Behälters einfährt und über einen keilförmigen Umlenkbereich am Fördermittel den Behälter von einer Stellfläche des Regalfaches anhebt, wobei während der Ausfahrbewegung der Trageinrichtung das Fördermittel an der Unterseite des Behälters ohne Relativverschiebung seiner Auflagefläche zum Behälter entgegen der Ausfahrrichtung abrollt und anschließend die Trageinrichtung bei stehendem Fördermittel zurückfährt. Beim Einlagern eines Behälters fährt die Trageinrichtung bei stehendem Fördermittel aus und anschließend rollt das Fördermittel während der Einfahrbewegung der Trageinrichtung an der Unterseite des Behälters ohne Relativverschiebung seiner Auflagefläche zum Behälter entgegen der Einfahrrichtung ab. Diese bekannte Verfahrensweise hat sich in der Praxis bereits bestens bewährt und zeichnet sich durch äußerst kurze Übergabe- bzw. Übernahmezeiten bei der Ein- und Auslagerung von Behältern in ein bzw. aus einem Regalfach aus.

Aufgabe der vorliegenden Erfindung ist es, eine Lastaufnahmevorrichtung und ein Verfahren zu schaffen, mit der bzw. dem ein Ladehilfsmittel auch am bzw. vom gassenfernen Abstellplatz eines Regallagers alleinig mittels Reibschluss zuverlässig abgelegt bzw. entnommen werden kann und soll das in einem Lagerraum zur Verfügung stehende Raumvolumen maximal ausgenutzt werden.

Die Aufgabe der Erfindung wird durch die im Kennzeichenteil des Anspruches 1 und 19 wiedergegebenen Maßnahmen und Merkmale gelöst. Die überraschenden Vorteile dabei sind, dass nunmehr auch mit den Lastaufnahmevorrichtungen, bei denen von der teleskopierbaren Trageinrichtung eine maximale Ausschublänge des Oberschlittens durch den von der Anordnung der Umlenkrollen etc. für die Zugmittel des Verschiebe- und/oder Fördermittelantriebes vorgegebenen Überlappungsbereich zwischen entgegengesetzten Stirnseiten des Grundrahmens und Oberschlittens begrenzt ist, das auf dem gassenfernen Abstellplatz und zur Regalgasse am weitesten entfernt abgelegte Ladehilfsmittel über seinen Schwerpunkt hinaus bis zumindest zu seiner in Ausfahrrichtung des Oberschlittens betrachtet, hinteren Stirnfläche unterfahren und dadurch ein Reibschluss zwischen der Unterseite des Ladehilfsmittels und Auflagefläche des Fördermittels zuverlässig hergestellt werden kann. Dadurch kann während dem Auf- und Abschieben des aus dem Regalfach auszulagernden bzw. in das Regalfach einzulagernden Ladehilfsmittels das Fördermittel und der Oberschlitten mit höheren Beschleunigungen verfahren. Da nun auch das am gassenfernen Abstellplatz abgelegte, hinterste Ladehilfsmittel vollständig unterfahren werden kann, können Ladehilfsmittel mit besonders geringem Gewicht und mit labiler Schwerpunktslage, wie dies beispielsweise bei einem mit Flüssigkeit gefüllten Behälter der Fall ist, manipuliert werden. Der Verstellweg des Grundrahmens der Trageinrichtung kann gezielt vorgegebenen werden und kann die in Ausfahrrichtung der teleskopierbaren Trageinrichtung vordere Stirnseite des Grundrahmens über eine Seitenbegrenzung der Hubplattform hinaus und gegebenenfalls teilweise in ein Regalfach einfahren, sodass im Gegensatz zu den Lastaufnahmevorrichtungen aus dem Stand der Technik eine Verbreitung der Regalgasse infolge der Verlängerung der Trageinrichtung nicht erforderlich ist und das zur Verfügung stehende Raumvolumen des Lagerraumes maximal ausgenutzt werden kann. Mittels der erfindungsgemäßen Lastaufnahmevorrichtung können nun aber auch mehr als zwei Ladehilfsmittel hintereinander auf den beiden Abstellplätzen zuverlässig ein- und ausgelagert werden.

Vorteilhaft sind auch die Ausbildungen nach den Ansprüchen 2 und 3, wodurch eine zu der Verschiebebewegung des Koppelungs- und Oberschlittens entkoppelte Verstellbewegung des Grundrahmens möglich ist und die Verschiebe- und Verstellbewegung aufeinanderfolgend ablaufen kann. Ebenso ist es möglich die Koppelungs- und Oberschlitten und den Grundrahmen gemeinsam oder einzeln zu bewegen.

Durch die Synchronisierung der Verschiebe- und Verstellmotoren sind der Verschiebe- und Verstellantrieb elektrisch miteinander gekoppelt, wie im Anspruch 4 beschrieben, sodass die Verstell- und Verschiebebewegung des Grundrahmens sowie Koppelungs- und Oberschlittens überlagert werden und dadurch der Ein- und Auslagervorgang rasch erfolgen kann.

Vorteilhaft sind auch die Weiterbildungen nach den Ansprüchen 5 bis 15, wodurch einerseits eine kompakte Bauweise der Lastaufnahmevorrichtung und anderseits der Koppelungs- und Oberschlitten aus deren eingeschobenen Ausgangsstellung in die vollständig ausgeschobene Arbeitsstellung und der Grundrahmen aus seiner in Bezug auf die vertikale Symmetrieebene der Lastaufnahmevorrichtung zentrischen, ersten Endstellung in eine gegebenenfalls bis über die Hubplattform hinaus ragende exzentrische, zweite Endstellung gleichzeitig mittels nur einem Verschiebemotor verstellt werden können. Dieser Verschiebemotor ist bevorzugt ortsfest auf der Hubplattform angeordnet, sodass keine unnötigen Massen mitbewegt werden müssen und eine wartungsfreundliche Anordnung ermöglicht sowie die in das Regalfach einfahrenden, geringen Querschnitte des Koppelungs- und Oberschlittens sowie gegebenenfalls des Grundrahmens nur auf Biegebeanspruchung bei ausgefahrener Last dimensioniert werden müssen. Durch Veränderung der Übersetzung der Antriebsräder kann die Ausschublänge jeweils des Koppelungs- und Oberschlittens sowie der Verstellweg des Grundrahmens abhängig von den Abmessungen der ein- und auszulagernden Ladehilfsmitteln gezielt beeinflusst werden. Von Vorteil ist auch der kraftschlüssige Eingriff zwischen Reibrad und Reibfläche, wodurch eine besonders geräuscharme Verstellung der teleskopierbaren Trageinrichtung möglich ist. Da nun der Verstellantrieb durch den Verschiebeantrieb gebildet ist, ist eine besonders einfache Steuerung der Verschiebebewegung der gesamten Trageinrichtung gegenüber der Fördergeschwindigkeit der Fördermittel möglich.

In vorteilhafter Weise kann der Grundrahmen in Bezug auf die Hubplattform nach beide Richtungen annähernd etwa um die Länge des Überlappungsbereiches verstellt werden, wodurch beidseits zum Regalbediengerät angeordnete Regallager mit der erfindungsgemäßen Lastaufnahmevorrichtung bedient werden können, wie dies im Anspruch 16 beschrieben ist.

Gemäß Anspruch 17 ist der Verstellweg des Grundrahmens nach beide Richtungen so gewählt, dass bei vollem Auszug der Trageinrichtung einerseits der Überlappungsbereich und andererseits auch der jeweilige Sicherheitsabstand zwischen einer Ein- bzw. Auslagerungsseite der Regallager und der Seitenbegrenzung der Hubplattform überbrückt wird.

Ein konstruktiv einfacher Aufbau einer Linearführungsvorrichtung ist im Anspruch 18 beschrieben.

Die Aufgabe der Erfindung wird aber auch durch die im Anspruch 20 wiedergegebenen Merkmale gelöst. Der überraschende Vorteil dabei ist, dass zusätzlich zu den Vorteilen gemäß Anspruch 1 und 19 die mit der erfindungsgemäßen Lastaufnahmevorrichtung ausgestattete Fördereinrichtung, insbesondere die Hubplattform mit einer Länge bemessen in Ein- bzw. Ausfahrrichtung der Trageinrichtung ausgebildet werden kann, die im Gegensatz zu den aus dem Stand der Technik bekannten Lastaufnahmevorrichtungen, um die Länge des Überlappungsbereiches verkürzt ausgebildet ist und deshalb die Fördereinrichtung entlang einer relativ schmalen Regalgasse verfährt sowie die von der Fördereinrichtung zu bewegenden Massen reduziert werden können.

Die Erfindung wird im Nachfolgenden anhand der in den Zeichnungen dargestellten Ausführungsbeispiele näher erläutert.

Es zeigen:
- Fig. 1: ein Lagersystem mit einem Förderfahrzeug mit einer erfindungsgemäßen Lastaufnahmevorrichtung in unterschiedlichen Höhenstellungen, in vereinfachter, schematischer Darstellung;
- Fig. 2: eine erste Ausführung der erfindungsgemäßen Lastaufnahmevorrichtung mit einer in der Ausgangsstellung auf der Hubplattform eingeschobenen, teleskopierbaren Trageinrichtung, in Seitenansicht und vereinfachter, schematischer Darstellung;
- Fig. 3: die erfindungsgemäße Lastaufnahmevorrichtung nach Fig. 2 bei vollem Auszug der teleskopierbaren Trageinrichtung, in Seitenansicht und vereinfachter, schematischer Darstellung;
- Fig. 4: einen Teilabschnitt eines Regallagers und die erfindungsgemäße Lastaufnahmevorrichtung beim Auslagervorgang, mit der unterhalb des Ladehilfsmittels vollständig eingefahrenen Trageinrichtung und das von einer Stellfläche des Regallagers abgehobene und an den Fördermitteln der Trageinrichtung abgestützte Ladehilfsmittel, in Stimansicht geschnitten und vereinfachter, schematischer Darstellung;
- Fig. 5: eine Ausschnittsvergrößerung der erfindungsgemäßen Lastaufnahmevorrichtung nach Fig. 4;
- Fig. 6: die Lastaufnahmevorrichtung nach Fig. 2 mit ausschließlich dem Verschiebeantrieb für den Grundrahmen sowie Koppelungs- und Oberschlitten in ihrer Ausgangsstellung, in Seitenansicht und vereinfachter Darstellung;
- Fig. 7: die Lastaufnahmevorrichtung nach Fig. 6 mit dem Verschiebeantrieb für den Grundrahmen sowie den Koppelungs- und Oberschlitten in ausgefahrener Arbeitsstellung;
- Fig. 8: eine andere Ausführungsvariante der erfindungsgemäßen Lastaufnahmevorrichtung, in Seitenansicht und vereinfachter Darstellung;
- Fig. 9: eine weitere Ausführungsvariante der erfindungsgemäßen Lastaufnahmevorrichtung, in Seitenansicht und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

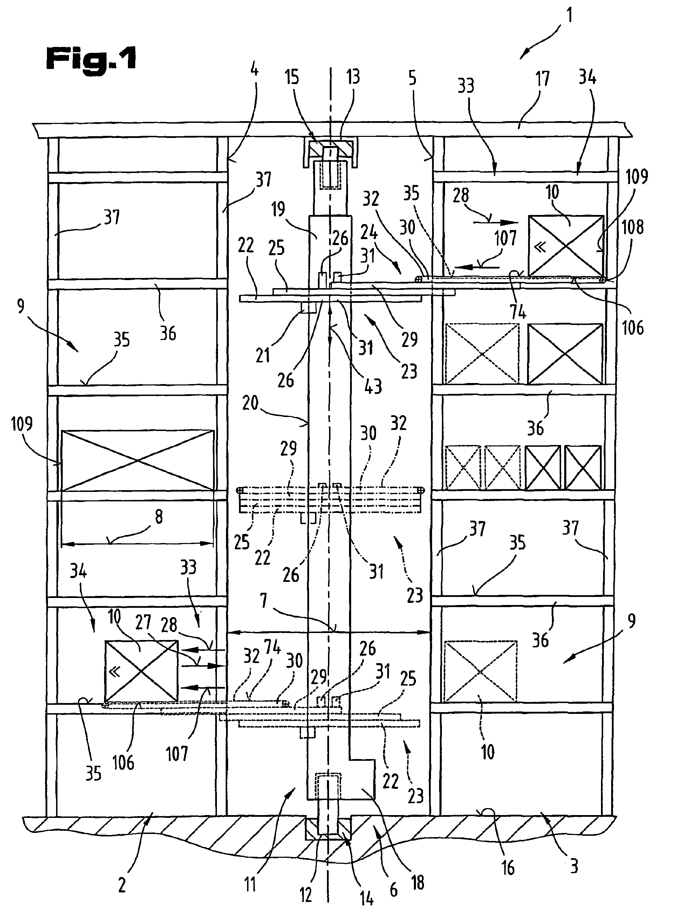

In der Fig. 1 ist ein Lagersystem 1 in vereinfachter Darstellung und in Ansicht gezeigt, das zwei baulich übereinstimmende und sich spiegelbildlich gegenüber stehende Regellager 2, 3 aufweist. Durch einen Abstand zwischen den einander zugewendeten Ein- bzw. Auslagerungsseiten 4, 5 der beiden Regallager 2, 3 ist eine Regalgasse 6 ausgebildet. Der Abstand bestimmt eine lichte Gassenbreite 7, die im wesentlichen nur geringfügig größer bemessen ist als eine maximale Tiefe 8 des in ein Regalfach 9 des Regellagers 2, 3 ein- oder auszulagernden Ladehilfsmittels 10, insbesondere Standardbehälter. Entlang der Regalgasse 6 und seitlich neben dem Regallager 2, 3 ist eine Fördereinrichtung 11, insbesondere ein Förderfahrzeug, wie ein schienengebundenes Regalbediengerät, auf Führungsbahnen 12, 13 in Gassenrichtung rechnergesteuert verfahrbar. Das Förderfahrzeug ist hierbei über stark vereinfacht dargestellte Fahrwerke 14, 15 an der auf einer horizontalen Aufstandsfläche 16 angeordneten Führungsbahn 12, insbesondere einer Fahrschiene, und der an einer Decke 17 des Lagersystems 1 befestigten Führungsbahn 13, insbesondere einer Fahrschiene, abgestützt bzw. geführt und über zumindest eine Antriebsanordnung 18 entlang der Fahrschienen verstellbar und weist einen mit den beiden Fahrwerken 14, 15 verbundenen, im Wesentlichen senkrecht zur Aufstandsfläche 16 erstreckenden Mast 19 auf. Der Mast 19 ist mit einer Führungsanordnung 20 versehen, entlang der mittels einem Hubantrieb 21 eine horizontal verlaufende Hubplattform 22 in einer zur Aufstandsfläche 16 im Wesentlichen senkrechten Richtung rechnergesteuert verstellbar ist, insbesondere verfahrbar. Auf der Hubplattform 22 ist zumindest eine erfindungsgemäße Lastaufnahmevorrichtung 23 mit einer diese umfassende Trageinrichtung 24 angeordnet.

Diese später noch im Detail beschriebene Trageinrichtung 24 weist einen Grundrahmen 25 und über ausschließlich einen Verschiebemotor 26, beispielsweise Servomotor, Schrittschaltmotor, in Ein- bzw. Ausfahrrichtung - gemäß eingetragenen Pfeilen 27, 28 - synchron zueinander und relativ zum Grundrahmen 25 verstellbare Koppelungs- und Oberschlitten 29, 30 sowie zumindest ein, bevorzugt zwei am Oberschlitten 30 gelagerte und über ausschließlich einen Fördermotor 31, beispielsweise Servomotor, Schrittschaltmotor, antreibbare Fördermittel 32, insbesondere einen Linearförderer, auf. Das zumindest eine Fördermittel 32 kann beispielsweise durch ein Förderband oder eine Förderkette oder mehrere hintereinander angeordnete Förderrollen gebildet sein. Der Verschiebe- und Fördermotor 26, 31 sind auf der Hubplattform 22 ortsfest angeordnet. Es sei an dieser Stelle darauf hingewiesen, dass die Trageinrichtung 24 bzw. der Grundrahmen 25, Koppelungs- und Oberschlitten 29, 30 in einer parallel zur Aufstandfläche 16 verlaufenden horizontalen Ebene in Ein- bzw. Ausfahrrichtung - gemäß Pfeil 27, 28 - senkrecht zur Längserstreckung der Regalgasse 6 und nach beide Richtungen in Bezug auf die Hubplattform 22 verstellbar ausgebildet sind.

Die in Bezug auf die Hubplattform 22 nach beide Richtungen teleskopartig ausziehbaren Koppelungs- und Oberschlitten 29, 30 sind synchron und gleichsinnig verschiebbar am Grundrahmen 25 gelagert, womit eine entsprechende Reichweite bzw. Ausfahrlänge der Trageinrichtung 24 erreicht wird und mittels der Trageinrichtung 24, insbesondere dem Oberschlitten 30, ausgehend von der Regalgasse 6 in Ausfahrrichtung - gemäß Pfeil 28 - gesehen, zumindest zwei hintereinander angeordnete Abstellplätze 33, 34 im Regalfach 9 anfahrbar sind und ausgehend von der Regalgasse 6 wahlweise die beidseits zur Regalgasse 6 angeordneten Regallager 2, 3 zur Ein- und Auslagerung der Ladehilfsmittel 10 bedient werden können, und zwar unabhängig ob das in vollen Linien gezeigte Ladehilfsmittel 10 am zur Regalgasse 6 entfernten, gassenfernen Abstellplatz 34 oder das in strichlierte Linien gezeigte Ladehilfsmittel 10 am zur Regalgasse 6 benachbarten, gassennahen Abstellplatz 33 oder zwei Ladehilfsmitteln 10 am gassennahen oder gassenfernen Abstellplatz 33, 34 abgelegt oder entnommen werden soll.

Die Regellager 2, 3 sind beispielsweise durch eine Stahlrahmenkonstruktion gebildet und weisen eine Vielzahl von übereinander angeordnete Stellflächen 35 auf, die jeweils die Abstellplätze 33, 34 ausbilden und auf denen nebeneinander in Ausfahrrichtung - gemäß Pfeil 28 - gesehen jeweils mehrere mittig zueinander ausgerichtete Ladehilfsmittel 10, wie beispielsweise quaderförmige Kästen, Behälter aus Kunststoff oder Karton oder gegebenenfalls auch Paletten, in einer Reihe hintereinanderliegend ablegbar sind. Die jeweilige horizontale Stellfläche 35 ist dabei beispielsweise durch aufeinander zulaufende Schenkel von Winkelprofilen 36 mit einem L-förmigen Querschnitt gebildet. Die in mehreren horizontalen Ebenen übereinander angeordneten Winkelprofile 36 sind mit vertikal zur Aufstandsfläche 16 ausgerichteten Regalstehern 37 verbunden und verlaufen jeweils in einem Abstand parallel zueinander senkrecht zur Längsrichtung der Regalgasse 6 bzw. parallel zur Ein- und Ausfahrrichtung - gemäß Pfeil 27, 28 - des Koppelungs- und Oberschlitten 29, 30.

Auch sei darauf hingewiesen, dass die Fördereinrichtung 11 auch durch ein ortsfest aufgestelltes Hubbalkenregalbediengerät mit einer vertikal und horizontal verstellbaren Hubplattform oder fahrerloses Transportsystem FTS etc. gebildet sein kann.

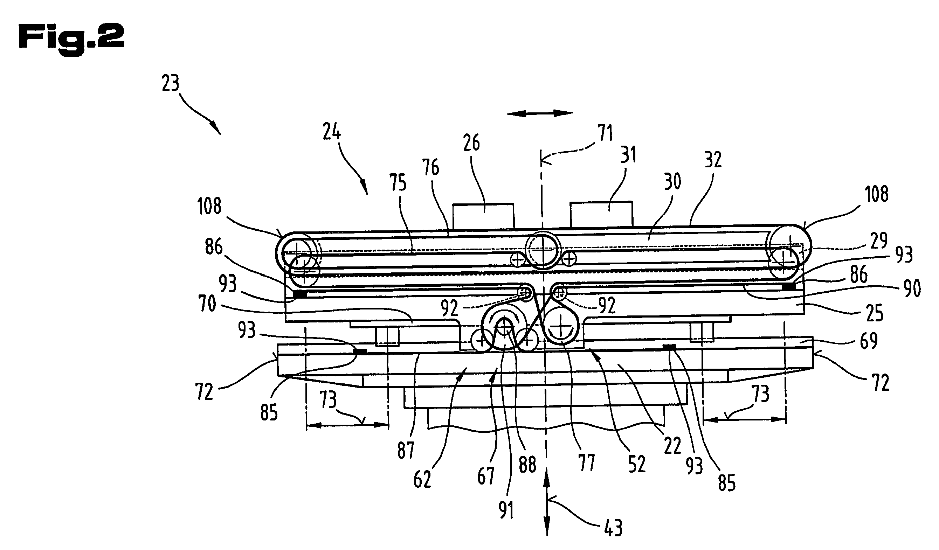

In den gemeinsam beschriebenen Fig. 2 bis 7 ist eine erste Ausführungsvariante der erfindungsgemäßen Lastaufnahmevorrichtung 23 zum Ein- und Auslagern von Ladehilfsmitteln 10, insbesondere kubischen, zylindrischen Behältern, in das bzw. aus dem Regalfach 9 des Regallagers 2, 3 mit dem in der Fig. 1 dargestellten, seitlich neben den Regallagern 2, 3 verfahrbaren Förderfahrzeug, in unterschiedlichen Ansichten gezeigt. Die Lastaufnahmevorrichtung 23 umfasst zumindest eine auf der im Wesentlichen in vertikaler Richtung - gemäß eingetragenem Doppelpfeil 43 - verstellbaren Hubplattform 22 angeordnete Trageinrichtung 24, die den Grundrahmen 25 und den zumindest einen daran verschiebbar angeordneten Koppelungsschlitten 29 und den zumindest einen Oberschlitten 30 aufweist.

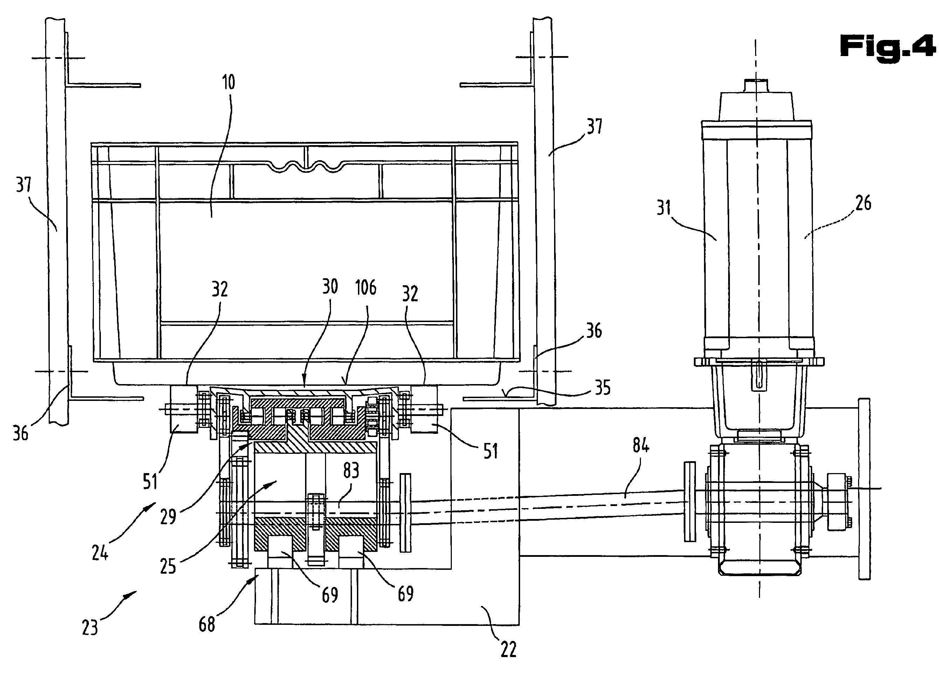

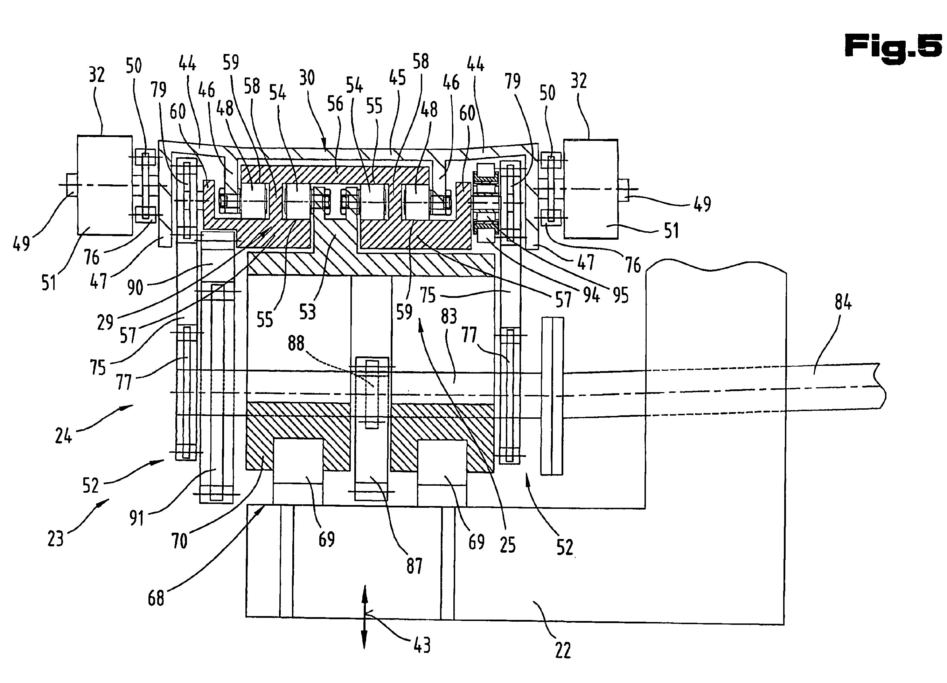

Wie Fig. 4 und 5 erkennen lässt, sind der Grundrahmen 25, Koppelungs- und Oberschlitten 29, 30 übereinander angeordnet und ist auf dem Grundrahmen 25 der Koppelungsschlitten 29 mittels einer Linearführung zwangsgeführt. Ebenso ist auf dem Koppelungsschlitten 29 der Oberschlitten 30 mittels einer Linearführung zwangsgeführt.

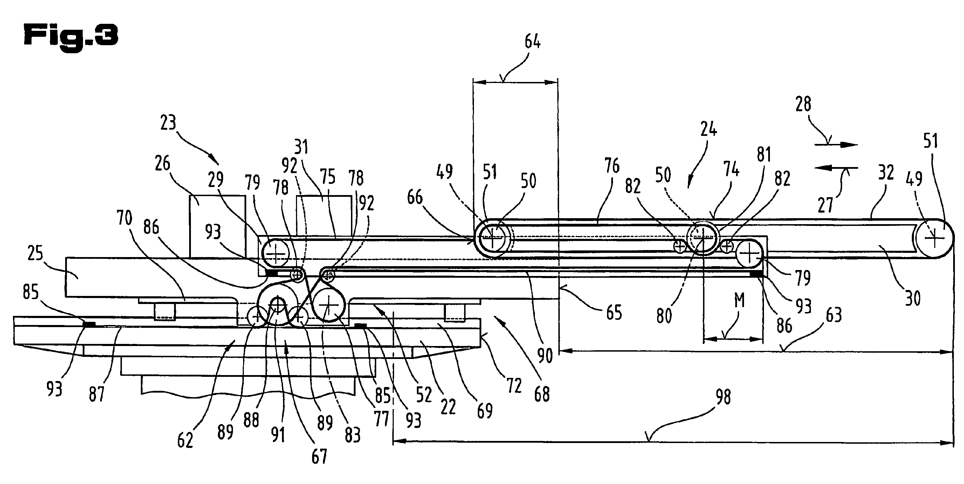

Der profilartige Oberschlitten 30 bildet zwei quer zur Längsrichtung der Trageinrichtung 24 im Abstand parallel zueinander und parallel zur Ein- und Ausfahrrichtung - gemäß den in Fig. 3 eingetragenen Pfeilen 27, 28 - verlaufende U-Profile und ein zwischen diesen angeordnetes und bevorzugt mit einer Basis 44 der beiden U-Profile verbundenes Basisprofil 45 aus. Die U-Profile weisen jeweils einen sich ausgehend von der Basis 44 in Richtung auf den Grundrahmen 25 erstreckenden inneren und äußeren Profilschenkel 46, 47 auf. Der Oberschlitten 30 ist über die zwischen den zueinander benachbarten inneren Profilschenkeln 46 und dem Koppelungsschlitten 29 angeordnete Linearführung am Koppelungsschlitten 29 verschiebbar gelagert. Im vorliegenden Ausführungsbeispiel ist die Linearführung durch jeweils seitlich an den benachbarten inneren Profilschenkeln 46 in Längsrichtung derselben in Abständen hintereinander angeordnete und lose drehbar an den Profilschenkeln 46 gelagerte Laufrollen 48 gebildet. Zweckmäßig erstreckt sich die Linearführung über annähernd die gesamte Länge des Oberschlittens 30. An jedem der äußeren Profilschenkeln 47 sind in Ausfahrrichtung - gemäß dem Pfeil 28 in Fig. 3 - der telekopierbaren Trageinrichtung 24 an den Enden des Oberschlittens 30 seitlich abstehende Achszapfen 49 angeordnet, auf denen jeweils eine Umlenkrolle 50 für ein Zugmittel eines noch näher zu beschreibenden Fördermittelantriebes 52 (siehe Fig. 3) und eine Umlenkrolle 51 für das Fördermittel 32 drehbar gelagert sind. Dabei sind die Umlenkrollen 50, 51 an einem der Enden des Oberschlittens 30 drehstarr miteinander verbunden.

Der Grundrahmen 25 ist als Profilschiene ausgebildet und ist auf einer dem Koppelungsschlitten 29 zugewandten Oberseite mit einem Fortsatz 53 versehen. Die Linearführung ist durch am Fortsatz 53 beidseitig in Abständen angeordnete und lose drehbar am Fortsatz 53 gelagerte Laufrollen 54 gebildet. Zweckmäßig erstreckt sich die Linearführung über annähernd die gesamte Länge des Grundrahmens 25.

Auf dem profilartigen Grundrahmen 25 stützt sich der über die Laufrollen 54 auf Laufbahnen 55 rollend geführte Koppelungsschlitten 29 ab, der aus zwei I-Profilen besteht, welche einen gemeinsamen Obergurt 56 und aufeinander zulaufende Untergurte 57 sowie zwischen dem Ober- und Untergurt 56, 57 erstreckende Stege 58 aufweisen und deren dem Koppelungsschlitten 29 zugewandten bzw. einander zugewandten Innenseiten vom Ober- und Untergurt 56, 57 jeweils die beiden Laufbahnen 55 für die Laufrollen 54 bilden. Die dem Koppelungsschlitten 29 abgewandten bzw. voneinander abgewandten Innenseiten des Ober- und Untergurtes 56, 57 bilden Laufbahnen 59 für die Laufrollen 48 des Oberschlittens 30 aus.

Eine andere, nicht weiters dargestellte Ausführung besteht darin, dass die Linearführung zwischen Koppelungs- und Oberschlitten 29, 30 sowie Grundrahmen 25 und Koppelungsschlitten 29 nicht, wie in den Ausführungen gezeigt, durch eine Rollenführung, sondern durch eine Gleitführung gebildet ist, wozu die Laufrollen 48, 54 durch entsprechende Gleitleisten, bevorzugt aus Kunststoff, ersetzt werden, die ihrerseits an den Laufbahnen 55, 59 abgestützt sind. Diese Gleitleisten oder die Laufrollen 48, 54 bilden Höhenführungsorgane der Linearführung aus.

Durch diese Linearführung sind der Grundrahmen 25, Koppelungs- und Oberschlitten 29, 30 in senkrechter Richtung zur Lastaufnahme im Wesentlichen spielfrei geführt. Für die im Wesentlichen spielfreie Führung des Grundrahmens 25 und Koppelungsschlitten 29 bzw. Koppelungsschlitten 29 und Oberschlitten 30 quer zur Längserstreckung der Trageinrichtung 24, weist die Linearführung zusätzlich zwischen den hintereinander im Abstand angeordneten Laufrollen 48, 54 nicht näher dargestellte Gleitleisten auf, die ihrerseits an den gegenüberliegenden, voneinander abgewandten vertikalen Seitenflächen des Fortsatzes 53 und den Stegen 58 bzw. an den Stegen 58 und den inneren Profilschenkeln 46 abgestützt sind. Diese Gleitleisten bilden Seitenführungsorgane der Linearführung aus.

An jedem Untergurt 57 des oben beschriebenen profilartigen Koppelungsschlittens 29 ist jeweils ein zum Steg 58 parallel verlaufender und zwischen den inneren und äußeren Profilschenkeln 46, 47 vorragender Schenkel 60 ausgebildet, wobei an einem ersten Schenkel 60 in Ausfahrrichtung - gemäß Pfeil 28 - der teleskopierbaren Trageinrichtung 24 an den Enden des Koppelungsschlittens 29 Umlenkrollen 79, 95 für ein Zugmittel eines noch näher zu beschreibenden Fördermittel- und Verschiebeantriebes 52, 62 (siehe Fig. 3) und an einem zweiten Schenkel 60 in Ausfahrrichtung - gemäß Pfeil 28 - der teleskopierbaren Trageinrichtung 24 an den Enden des Koppelungsschlittens 29 Umlenkrollen 79 des Fördermittelantriebes 52 lose drehbar gelagert sind.

Wie aus Fig. 3 ersichtlich wird, ist der Grundrahmen 25, Koppelungs- und Oberschlitten 29, 30 jeweils mit einer in etwa gleichen Länge in Ein- bzw. Ausfahrrichtung ― gemäß Pfeil 27, 28 - ausgebildet. Eine maximale Ausschublänge 63 des vollständig ausgefahrenen Oberschlittens 30, bemessen zwischen den in Ausfahrrichtung ― gemäß Pfeil 28 - vorderen Stirnseiten des Grundrahmens 25 und Oberschlittens 30, ist geringer als die maximale Länge des Grundrahmens 25 und ist diese durch einen Überlappungsbereich 64 zwischen entgegengesetzten Stirnseiten 65, 66 des Grundrahmens 25 und Oberschlittens 30 begrenzt.

Wie aus der Zusammenschau der Fig. 2 bis 5 ersichtlich, ist die gesamte Trageinrichtung 24 in Ein- bzw. Ausfahrrichtung - gemäß Pfeil 27, 28 - zwischen der in Fig. 2 dargestellten eingeschobenen Ausgangsstellung und der in Fig. 3 dargestellten ausgeschobenen Arbeitsstellung verstellbar ausgebildet.

Dazu ist zwischen der Trageinrichtung 24 bzw. dem Grundrahmen 25 und der Hubplattform 22 zumindest ein Verstellantrieb 67 und zumindest eine zur Ein- bzw. Ausfahrrichtung - gemäß Pfeil 27, 28 - parallel verlaufende Linearführungsvorrichtung 68 angeordnet. Die Linearführungsvorrichtung 68 weist bevorzugt zwei quer zur Ein- bzw. Ausfahrrichtung - gemäß Pfeil 27, 28 - im Abstand parallel zueinander verlaufende und auf der Hubplattform 22 ortsfest befestigte Führungsholme 69 und einen am Grundrahmen 25 befestigten Schlitten 70 auf, wobei die Trageinrichtung 24 über den Schlitten 70 auf den beiden Führungsholmen 69 bevorzugt gleitbeweglich gelagert bzw. entlang derselben geführt und über den Verstellantrieb 67 in Richtung auf das Regalfach 9 etwa um die Länge des Überlappungsbereiches 64 gegenüber der Hubplattform 22 verstellbar angeordnet ist. Die Linearführungsvorrichtung 68 kann durch eine Gleit-, Kugelschienen-, Rollenschienen-, Kreuzrollen- oder Laufrollenführung gebildet sein. Natürlich kann der Schlitten 70 andererseits auch auf der Hubplattform 22 und die Führungsholme 69 am Grundrahmen 25 befestigt sein, wie dies jedoch nicht näher dargestellt ist.

Der Grundrahmen 25 der Trageinrichtung 24 ist aus der ersten Endstellung über eine vertikale Symmetrieebene 71 hinweg spiegelbildlich und nach beide Richtung bis über die voneinander abgewendeten Seitenbegrenzungen 72 der Hubplattform 22 in die zweite Endstellung hinaus - zumindest um die Länge des Überlappungsbereiches 64 - gleich weit ausfahrbar. Ein Verstellweg 73 des Grundrahmens 25 ist nach beide Seiten identisch ausgebildet und entspricht jeweils dem Überlappungsbereich 64, bevorzugt zuzüglich des Sicherheitsabstandes zwischen der Ein- bzw. Auslagerungsseite 4, 5 und der jeweiligen Seitenbegrenzung 72 der Hubplattform 22 und beträgt zwischen 130 mm und 250 mm, insbesondere 150 mm und 230 mm, beispielsweise 170 mm.

Wie aus den Fig. ersichtlich, ist der Oberschlitten 30 mit zwei im Abstand parallel zueinander und parallel zur Ein- bzw. Ausfahrrichtung - gemäß Pfeil 27, 28 - verlaufenden Fördermitteln 32 versehen, die durch eine endlos umlaufende Kette oder einen Zahnriemen gebildet sind und jeweils über die an den in den Endbereichen des Oberschlittens 30 angeordneten Achszapfen 49 drehbar gelagerte Umlenkrollen 51 geführt sind. Die beiden Fördermittel 32 bilden mit ihrem dem Koppelungsschlitten 29 abgewandten oberen Trum eine horizontale Auflagefläche 74 für das zu transportierende Ladehilfsmittel 10 bzw. dem Behälter aus und ist jedes Fördermittel 32 mit einem Fördermittelantrieb 52 antriebsverbunden bzw. gekoppelt. Der Oberschlitten 30 bzw. die Auflagefläche 74 der Fördermittel 32 weist eine Länge in Ein- bzw. Ausfahrrichtung - gemäß Pfeil 27, 28 - auf, die annähernd der maximalen Tiefe 8 eines ein- oder auszulagernden Ladehilfsmittels 10 entspricht.

Jeder Fördermittelantrieb 52 umfasst zwei Zugmitteltriebe, die jeweils ein erstes und zweites Zugmittel 75, 76 aufweisen, die endlos umlaufend ausgebildet sind. Das endlos umlaufende erste Zugmittel 75 ist von einem ortsfest am Grundrahmen 25 angeordneten Antriebsrad 77 über zwei etwa mittig am Grundrahmen 25 gelagerte Umlenkrollen 78 und in Ausfahrrichtung - gemäß Pfeil 28 - der teleskopierbaren Trageinrichtung 24 an den Enden des Koppelungsschlittens 29 gelagerte Umlenkrollen 79 geführt. Das endlose zweite Zugmittel 76 ist am Oberschlitten 30 angeordnet und um die an einem der Enden und etwa mittig am Oberschlitten 30 gelagerte Umlenkrollen 50 geführt. Die etwa mittig am Oberschlitten 30 gelagerte Umlenkrolle 50 ist über eine am Oberschlitten 30 angeordnete Koppelwelle 80 mit einer auf dieser drehfest gelagerten Antriebsrolle 81 drehstarr verbunden, wobei die Antriebsrolle 81 während der Ein- und Ausfahrbewegung vom Koppelungs- und Oberschlitten 29, 30 auf dem ersten Zugmittel 75 abrollt. Die Umlenkrolle 50 ist also mit der durch das erste Zugmittel 75 angetriebenen Antriebsrolle 81 verbunden. Etwa mittig am Oberschlitten 30 gelagerte Umlenkrollen 82 führen das erste Zugmittel 75 mit einem Umschlingungswinkel an der jeweils zugeordneten Antriebsrolle 81 entlang.

Die Zugmittel 75, 76 sind durch eine Kette, einen Zahnriemen oder Seilzug gebildet, wodurch die Umlenkrollen 50, 78, 79, 82, das Antriebsrad 77 und die am Oberschlitten 30 gelagerte Antriebsrolle 81 entsprechend entweder als Kettenräder, Zahn- oder Umlenkscheibe ausgebildet sind. Wesentlich ist, dass das Drehmoment vom Antriebsrad 77 im Wesentlichen schlupffrei auf das jeweilige Fördermittel 32 übertragen wird.

Die Antriebsräder 77 der beiden Zugmitteltriebe - siehe Fig. 4 und 5 - sind auf einer gemeinsamen Antriebswelle 83 drehfest miteinander verbunden und über ein Drehbewegungsübertragungsglied 84, insbesondere eine kardanische Welle, wie Gelenkwelle mit dem auf der Hubplattform 22 ortsfest angeordneten Fördermotor 31 gekoppelt. Die Drehrichtung des Fördermotors 31 ist reversibel ausgebildet, sodass die Förderrichtung der Fördermittel 32 wahlweise verändert werden kann. Die Anordnung des Fördermotors 31 getrennt vom Koppelungs- und Oberschlitten 29, 30 erweist sich von Vorteil, da einerseits keine beweglichen Leitungen mehr erforderlich sind und andererseits keine unnötigen Massen am Koppelungs-und Oberschlitten 29, 30 mitbewegt werden müssen und deshalb nun auch Fördermotoren 31 mit hohen Antriebsleistungen, die zwangsweise zu einer größeren Bauweise führen, eingesetzt werden können und damit auch die Beschleunigungs- und Verzögerungsphase der synchron angetriebenen Fördermittel 32 während dem Ein- und Auslagern eines Behälters in das bzw. aus dem Regalfach 9 verkürzt werden kann, sodass die Behälter rasch ein- und ausgelagert werden können.

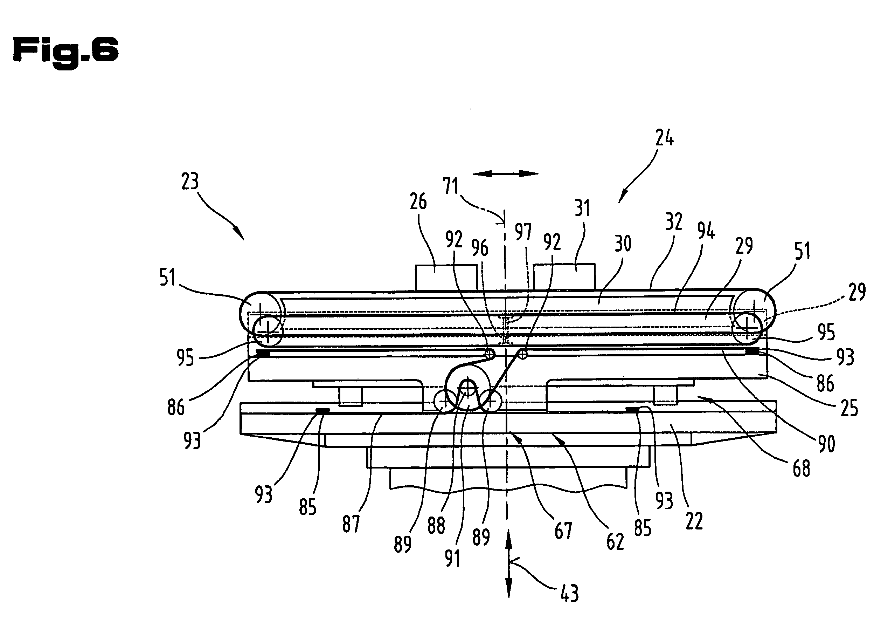

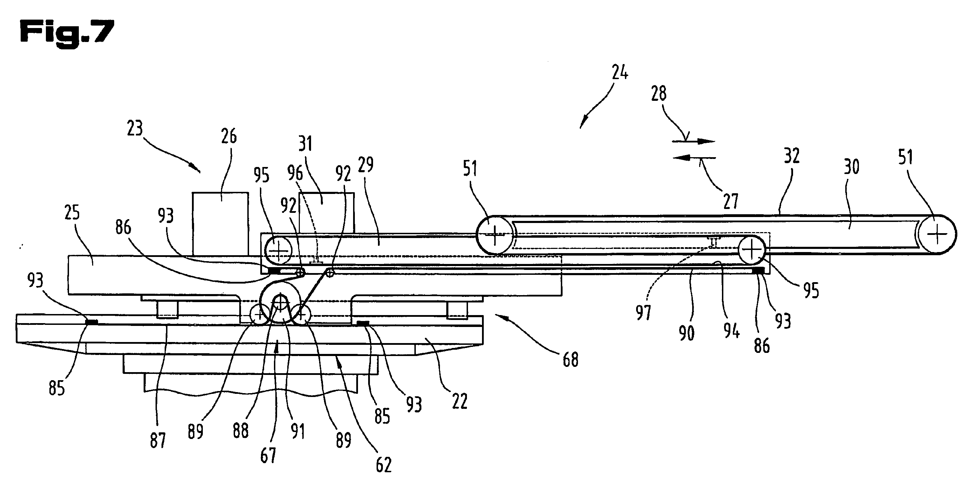

Für die Verstellung der teleskopierbaren Trageinrichtung 24 aus ihrer Ausgangsstellung nach Fig. 6 in Ausfahrrichtung - gemäß Pfeil 28 - in die Arbeitsstellung nach Fig. 7, weist die Lastaufnahmevorrichtung 23 den in Fig. 6 und 7 näher dargestellten Verschiebeantrieb 62 auf, über den der Koppelungs- und Oberschlitten 29, 30 in Ein- bzw. Ausfahrrichtung - gemäß Pfeil 27, 28 - synchron zueinander und relativ zum Grundrahmen 25 verstellbar sind. Bei dieser gezeigten Ausführung bildet der Verschiebeantrieb 62 den Verstellantrieb 67 aus und weist einen ersten, zweiten und dritten Zugmitteltrieb mit einem ersten, zweiten und dritten Übertragungsmittel auf. Das erste Übertragungsmittel vom ersten Zugmitteltrieb ist durch ein erstes Zugmittel 87, beispielsweise Kette, Zahnriemen oder Seilzug, gebildet, das von einem am Grundrahmen 25 ortsfest gelagerten ersten Antriebsrad 88 über zwei ortsfest am Grundrahmen 25 gelagerte Umlenkrollen 89 geführt ist und die beiden Enden 85 des ersten Zugmittels 87 an Befestigungspunkten 93 mit der Hubplattform 22 fest verbunden sind. Das erste Übertragungsmittel greift in das Antriebsrad 88 formschlüssig ein.

Das zweite Übertragungsmittel vom zweiten Zugmitteltrieb ist durch ein zweites Zugmittel 90, beispielsweise Kette, einen Zahnriemen oder Seilzug, gebildet, das von einem am Grundrahmen 25 ortsfest gelagerten zweiten Antriebsrad 91 über zwei etwa mittig am Grundrahmen 25 gelagerte Umlenkrollen 92 zu in Ausfahrrichtung - gemäß Pfeil 28 - der Trageinrichtung 24 an den Enden des Koppelungsschlittens 29 angeordneten Befestigungspunkten 93 geführt ist und die beiden Enden 86 des zweiten Zugmittels 90 mit dem Koppelungsschlitten 29 fest verbunden sind. Das zweite Übertragungsmittel greift in das Antriebsrad 91 formschlüssig ein.

Wie nicht weiters dargestellt, sind die beiden Antriebsräder 88, 91 auf einer gemeinsamen Antriebswelle drehfest gelagert. Diese Antriebswelle ist über ein ebenfalls nicht dargestelltes Drehbewegungsübertragungsglied, insbesondere eine kardanische Welle, wie Gelenkwelle, mit dem auf der Hubplattform 22 ortsfest angeordneten Verschiebemotor 26 gekoppelt.

Das dritte Übertragungsmittel vom dritten Zugmitteltrieb ist durch ein drittes Zugmittel 94, beispielsweise Kette, einen Zahnriemen oder Seilzug, gebildet, das endlos umlaufend um zwei in Ausfahrrichtung - gemäß Pfeil 28 - der teleskopierbaren Trageinrichtung 24 an den Enden des Koppelungsschlittens 29 gelagerte Umlenkrollen 95 geführt ist, wobei der Koppelungsschlitten 29 über ein erstes Mitnahmeorgan 96 mit dem Grundrahmen 25 und der Oberschlitten 30 über ein zweites Mitnahmeorgan 97 mit dem Koppelungsschlitten 29 bewegungsmäßig mechanisch gekoppelt ist. Dabei ist das erste Mitnahmeorgan 96 seinerseits mit einem dem Grundrahmen 25 zugewandten unteren Trum des Zugmittels 94 und mit einem Rahmen des Grundrahmens 25 verbunden. Das zweite Mitnahmeorgan 97 ist seinerseits mit einem dem Oberschlitten 30 zugewandten oberen Trum des Zugmittels 94 und mit einem Rahmen des Oberschlittens 30 verbunden. Somit kann über die drei Zugmitteltriebe der Grundrahmen 25, Koppelungs- und Oberschlitten 29, 30 in Abhängigkeit von der Drehrichtung des Antriebsrades 88, 91 in Bezug auf die vertikal Symmetrieebene 71 bzw. der Hubplattform 22 nach beide Richtungen gleich weit ausgefahren werden.

Der Durchmesser des Antriebsrades 91, um das das zweite Zugmittel 90 gelegt ist, ist größer als der des Antriebsrades 88, um das das erste Zugmittel 87 gelegt ist. Die Antriebsräder 88, 91 bilden ein Übersetzungsgetriebe aus, sodass der Grundrahmen 25 in einem festen Untersetzungsverhältnis zum Oberschlitten 30 angetrieben wird.

Die Drehrichtung des Verschiebemotors 26 ist reversibel ausgebildet, sodass die Trageinrichtung 24 in Bezug auf die Hubplattform 22 nach beide Seiten in die Regalfächer 9 der beidseits zum Regalbediengerät angeordneten Regallager 2, 3 einfahren kann.

Wird nun die Antriebswelle und damit die beiden Antriebsräder 88, 91 in Umdrehung versetzt, wird eine Verschiebung der gesamten Trageinrichtung 24 bzw. eine Verstellung des Grundrahmens 25 in Richtung auf das Regalfach 9 eines der Regallager 2; 3 um den in der Fig. 2 eingetragenen Verstellweg 73 und gleichzeitig eine Ausfahrbewegung des Koppelungs- und Oberschlittens 29, 30 bewirkt, wobei das Übersetzungsverhältnis der beiden Antriebsräder 88, 91 derart gewählt ist, dass bei einer Verstellung des Grundrahmens 25 von beispielsweise 150 mm zusätzlich der Oberschlittens bis auf 1110 mm ausgefahren wird. Dafür ergibt sich beispielsweise ein Übersetzungsverhältnis von i = 3,7. Der Oberschlitten 30 legt dabei den doppelten Weg des Koppelungsschlittens 29 zurück. Bei vollem Auszug der telekopierbaren Trageinrichtung 24 entspricht die gesamte Ausfahrlänge 98, wie in Fig. 3 eingetragen, der Summe aus dem Verstellweg 73 zuzüglich den Ausschublängen des Koppelungs- und Oberschlittens 29, 30 und ergibt im vorliegenden Beispiel 1260 mm. Geht man davon aus, dass der Oberschlitten 29 eine Länge von etwa 1260 mm aufweist, und ein Sicherheitsabstand zwischen der Ein- bzw. Auslagerungsseite 4, 5 und der jeweiligen Seitenbegrenzung 72 der Hubplattform 22 etwa 50 mm und die Regaltiefe 1200 mm beträgt, kann bei vollem Auszug des Oberschlittens 30 das oder die Fördermittel 32, insbesondere mit seiner(n) ebenen Auflagefläche(n) 74, bis zumindest zu einer in Ausfahrrichtung - gemäß Pfeil 28 - des Oberschlittens 30 betrachtet, hinteren aufrechten Stirnfläche 109 (siehe Fig. 1) ausfahren, sodass auch das am gassenfernen Abstellplatz 34 (siehe Fig. 1) abgelegte Ladehilfsmittel 10 vollständig unterfahren werden kann. Dabei kann oder können gegebenenfalls das oder die Fördermittel 32, insbesondere mit seiner(n) ebenen Auflagefläche(n) 74, auch die in Ausfahrrichtung - gemäß Pfeil 28 - des Oberschlittens 30 betrachtet, hintere aufrechte Stirnfläche 109 in Ausfahrrichtung - gemäß Pfeil 28 - geringfügig überfahren, beispielsweise um etwa 10 mm bis 30 mm.

Durch Veränderung der Übersetzung der Antriebsräder 88, 91 können bei vorgegebenem Verstellweg 73 die Ausschublängen des Koppelungs- und Oberschlittens 29, 30 und damit die gesamte Ausfahrlänge 98 gezielt beeinflusst werden. Der Verstellweg 73 entspricht nur einem Bruchteil der Ausschublänge 63 des Koppelungs- und/oder Oberschlittens 29, 30.

Die Trageinrichtung 24 muss nach beide Richtungen gleich weit ausfahren können, wozu die Umlenkrolle 50 und Antriebsrolle 81 mittig sowie die Umlenkrolle 82 beidseits neben der Antriebsrolle 81 am Oberschlitten 30 angeordnet sind. Wird nun der Koppelungs- und Oberschlitten 29, 30 in Ausfahrrichtung - gemäß Pfeil 28 - ausgefahren, werden aufgrund der Relativverschiebung zwischen Ober- und Koppelungsschlitten 29, 30 die Antriebs- und Umlenkrolle 81, 50, 82 in Richtung auf die Umlenkrolle 79 soweit bewegt, dass sie gerade nicht kollidieren. Bei vollem Auszug von Ober- und Koppelungsschlitten 29, 30 liegen die Antriebs- und Umlenkrolle 81, 50, 82 knapp neben der am Koppelungsschlitten 29 jeweiligen stirnseitig angeordneten Umlenkrolle 79 für das Zugmittel 75 des Fördermittelantriebes 52, wie in Fig. 3 ersichtlich. Der Oberschlitten 30 kann deshalb nur um die durch ein vom Durchmesser der Umlenkrollen 79, 82 und dem Radius der Antriebsrolle 81 sowie der Beabstandung jeweils zwischen der Antriebs- und Umlenkrolle 81, 50, 82 definiertes Mindestmaß reduzierte maximale Ausschublänge 63 ausgefahren werden, sodass zwangsweise bei vollem Auszug des Koppelungs- und Oberschlitten 29, 30 eine Mindestüberlappung bzw. der Überlappungsbereich 64 zwischen dem Oberschlitten 30 und Grundrahmen 25 ausgebildet ist. Da die Trageinrichtung 24 nach beide Richtungen teleskopierbar ausgebildet ist, entspricht der Überlappungsbereich 64 etwa dem doppelten Mindestmaß "M". Aus Gründen der besseren Übersicht der Zugmittelführung ist das Mindestmaß "M" gegenüber dem Überlappungsbereich 64 nicht maßstäblich eingetragen.

Wie aus dieser Betrachtung ersichtlich wird, ergibt sich dieser Überlappungsbereich 64 nur deshalb, da das, das Fördermittel 32 antreibende Zugmittel 75 des Fördermittelantriebes 52 vom Antriebsrad 77 am Grundrahmen 25 über die am Koppelungsschlitten 29 stirnseitig angeordneten Umlenkrollen 79 geführt ist und die mittig am Oberschlitten 30 angeordneten Antriebs- und Umlenkrollen 81, 82 in das Zugmittel 75 eingreifen.

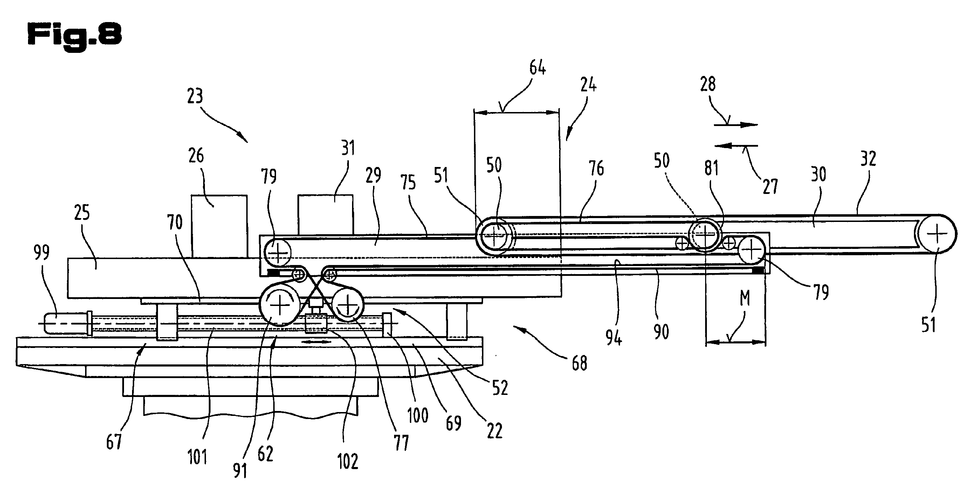

In der Fig. 8 ist eine weitere Ausführungsvariante der erfindungsgemäßen Lastaufnahmevorrichtung 23 in Seitenansicht und stark vereinfachter Darstellung gezeigt. Die Lastaufnahmevorrichtung 23 umfasst die wenigstens eine Trageinrichtung 24, die den Grundrahmen 25 und die über den Verschiebeantrieb 62 in Ein- bzw. Ausfahrrichtung - gemäß Pfeil 27, 28 - synchron zueinander und relativ zum Grundrahmen 25 verstellbaren Koppelungs- und Oberschlitten 29, 3 0 sowie zwei am Oberschlitten 30 gelagerte Fördermittel 32 aufweist. Jedes Fördermittel 32 ist, wie bereits oben beschrieben, mit jeweils einem Fördermittelantrieb 52 gekoppelt. Der Aufbau des Fördermittelantriebes 52 entspricht jenem, wie er bereits in den vorangegangenen Fig. 2 bis 7 beschrieben wurde.

Der Verschiebeantrieb 62 weist den bereits oben beschriebenen zweiten und dritten Zugmitteltrieb mit dem zweiten und dritten Zugmittel 90, 94 auf. Die Ausbildung und Anordnung des zweiten und dritten Zugmittels 90, 94 kann ebenfalls auf diese Figur identisch übertragen werden. Im Gegensatz zu den vorangegangenen Fig. 2 bis 7 entfällt der erste Zugmitteltrieb und wird durch einen Linearantrieb ersetzt. Das Antriebsrad 91 vom Verschiebeantrieb 62 ist wiederum mit dem auf der Hubplattform 22 ortsfest angeordneten Verschiebemotor 26 gekoppelt.

Der Verstellantrieb 67 ist vom Verschiebeantrieb 62 getrennt angeordnet und durch einen elektrisch betätigten Linearantrieb in Form eines Gewindespindelantriebes gebildet und weist einen elektrischen Verstellmotor 99 auf, über den eine einseitig durch ihn und auf der gegenüberliegenden Seite durch einen Lagerbock 100 drehbar gelagerte Gewindespindel 101 antreibbar ist. Die Gewindespindel 101 ist von einer Spindelmutter 102 umgriffen, die mittels einer Brücke mit dem Grundrahmen 25 bewegungsfest verbunden ist, sodass abhängig von der Drehrichtung des Verstellmotors 99 die Gewindespindel 102 in Links- oder Rechtslauf versetzt und die Trageinrichtung 24, insbesondere der Grundrahmen 25, in Ein- bzw. Ausfahrrichtung - gemäß Pfeil 27, 28 - verstellt wird. Der Verstellantrieb 67, insbesondere der Verstellmotor 99, die Gewindespindel 101 und der Lagerbock 100 sind auf der Hubplattform 22 ortsfest befestigt. Der Verschiebe- und Verstellmotor 26, 99 sind zweckmäßig synchronisiert. Dabei erhalten der Verschiebe- und Verstellmotor 26, 99 gleichzeitig von einer Steuerung ein Signal und werden beide gleichzeitig in Betrieb geschalten.

Eine andere, nicht näher dargestellte Ausführungsvariante besteht darin, dass der Verstellantrieb 67 durch einen pneumatischen oder hydraulischen Linearantrieb, insbesondere ein kolbenstangenloser Zylinder, gebildet ist. Dieser Zylinder ist an der Hubplattform 22 angeordnet und ist ein in Längsrichtung desselben verschiebbarer Schlitten mit dem Grundrahmen 25 bewegungsfest verbunden. Zweckmäßig wird für die erste und zweite Endstellung des Grundrahmens 25 die jeweilige Endlage des Zylinders angefahren, sodass eine ausreichende Positioniergenauigkeit erreicht wird. Der Zylinder weist dabei die Linearführungsvorrichtung 68 auf. Eine andere nicht dargestellte Ausführung des Verstellantriebes 67 besteht darin, dass dieser durch ein Schubkurbeltriebwerk gebildet ist.

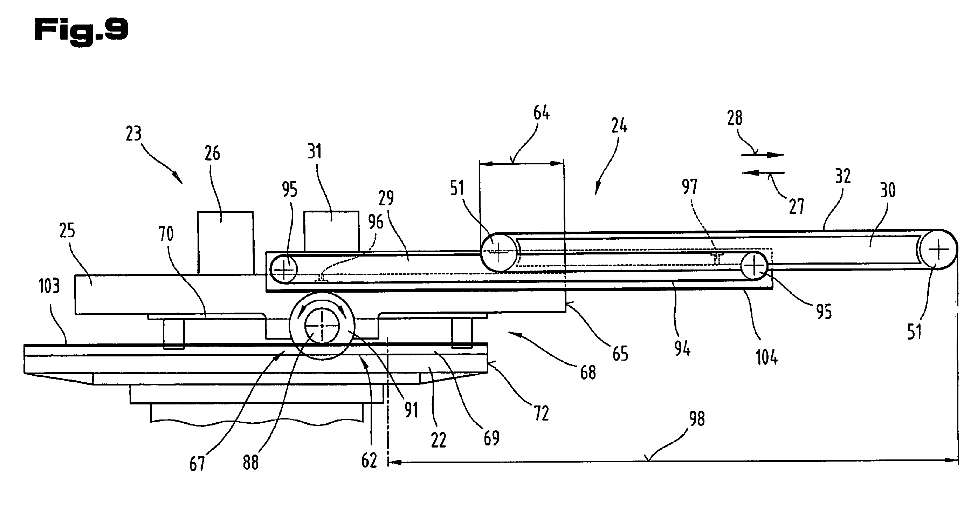

In der Fig. 9 ist eine weitere Ausführungsvariante der erfindungsgemäßen Lastaufnahmevorrichtung 23 mit der Trageinrichtung 24 in Seitenansicht und in stark vereinfachter, schematischer Darstellung gezeigt. Aus Gründen der besseren Übersicht ist nur der den Verstellantrieb 67 aufweisende Verschiebeantrieb 62 dargestellt. Jedem Fördermittel 32 ist ein Fördermitteantrieb 52 zugeordnet, welcher in dieser Fig. nicht dargestellt ist. Die Trageinrichtung 24 weist wiederum den Grundrahmen 25 und die über den Verschiebeantrieb 62 in Ein- bzw. Ausfahrrichtung - gemäß Pfeil 27, 28 - synchron zueinander und relativ zum Grundrahmen 25 verstellbaren Koppelungs- und Oberschlitten 29, 30 sowie die am Oberschlitten 30 gelagerten und von den Fördermittelantrieben 52 antreibbaren Fördermittel 32 auf. Über diesen Verschiebeantrieb 62 ist der Koppelungs- und Oberschlitten 29, 30 zwischen der Ausgangsstellung und der Arbeitsstellung - wie sie in der Fig. 9 dargestellt ist - sowie der Grundrahmen 25 zwischen der ersten und zweiten Endstellung um die Ausfahrlänge 98 verstellbar ausgebildet. Der Verschiebeantrieb 62 weist das in das erste Antriebsrad 88 und in das zweite Antriebsrad 91 eingreifende erste und zweite Übertragungsmittel sowie ein am Koppelungsschlitten 29 gelagertes drittes Übertragungsmittel auf. Das erste Übertragungsmittel ist auf einer dem Koppelungsschlitten 29 zugewandten Oberseite an der Hubplattform 22 ortsfest angeordnet und durch eine Zahnstange 103 oder eine(n) linear gespannte(n) Kette, Zahnriemen gebildet, mit der ein(e) das Antriebsrad 88 bildendes Zahnrad oder bildende Zahnscheibe kämmt.

Das zweite Übertragungsmittel ist ebenfalls durch eine auf einer dem Grundrahmen 25 zugewandten Unterseite am Koppelungsschlitten 29 angeordnete Zahnstange 104 oder eine(n) linear gespannte(n) Kette, Zahnriemen gebildet, mit der ein(e) durch das Antriebsrad 91 gebildetes Zahnrad oder gebildete Zahnscheibe kämmt. Die Zahnstangen 103, 104 sind parallel verlaufend zur Ein- bzw. Ausfahrrichtung - gemäß Pfeil 27, 28 - ausgerichtet und erstrecken sich bevorzugt annähernd über die gesamte Länge der Hubplattform 22 bzw. des Koppelungsschlitten 29. Der Durchmesser des Antriebsrades 91 ist größer als der des Antriebsrades 88. Die beiden Antriebsräder 88, 91 sind auf der nicht dargestellten gemeinsamen Antriebswelle am Grundrahmen 25 antreibbar gelagert und über ein nicht dargestelltes Drehbewegungsübertragungsglied, insbesondere eine kardanische Welle, wie Gelenkwelle, mit dem auf der Hubplattform 22 angeordneten Verschiebemotor 26 gekoppelt.

Das dritte Übertragungsmittel ist, wie bereits oben ausführlich beschrieben, durch das dritte Zugmittel 94 gebildet, das endlos umlaufend um zwei an den Enden des Koppelungsschlittens 29 gelagerte Umlenkrollen 95 geführt ist und über die Mitnahmeorgane 96, 97 einerseits mit dem Grundrahmen 25 und andererseits mit dem Oberschlitten 30 antriebsmäßig verbunden ist.

Werden die beiden Antriebsräder 88, 91 über die Antriebswelle gemeinsam in Umdrehung versetzt, wird einerseits der Grundrahmen 25 in Ausfahrrichtung - gemäß Pfeil 28 - aus seiner zur Hubplattform 22 zentrischen ersten Endstellung in eine zur Hubplattform 22 exzentrische zweite Endstellung, wie in Fig. 9 dargestellt, relativ zur Hubplattform 22 verstellt und gleichzeitig der Koppelungs- und Oberschlitten 29, 30 ebenfalls in Ausfahrrichtung - gemäß Pfeil 28 - in Abhängigkeit vom Übersetzungsverhältnis zwischen dem Antriebsrad 88 und 91 synchron zueinander und relativ zum Grundrahmen 25 gleichsinnig verschoben.

In einer anderen nicht näher dargestellten Ausführung ist das erste, zweite Antriebsrad 88, 91 durch ein Reibrad und das erste, zweite Übertragungsmittel durch eine auf der Oberseite der Hubplattform 22 bzw. Unterseite vom Koppelungsschlitten 29 parallel zur Ein- bzw. Ausfahrrichtung 27, 28 angeordnete Reibfläche gebildet ist.

Im Nachfolgenden wird nun anhand der Fig. 1 der Ein- und Auslagervorgang von Behältern in bzw. aus dem Regalfach 9 beschrieben, wobei mit der in vollen Linien gezeigten Lastaufnahmevorrichtung 23 ein Behälter vom gassenfernen Abstellplatz 34 des Regalfaches 9 ausgelagert bzw. entnommen und mit der in strichlierten Linien gezeigten, höhenverstellten Lastaufnahmevorrichtung 23 ein Behälter an den gassenfernen Abstellplatz 34 eingelagert werden soll. Die in strichpunktierte Linien gezeigte Lastaufnahmevorrichtung 23 zeigt die Ausgangsstellung der Trageinrichtung 24. Der gassenfeme Abstellplatz 34 entspricht einer in Ausfahrrichtung ― gemäß Pfeil 28 - des Oberschlittens 30 betrachtet, hinteren Tiefenposition, wohingegen der gassennahe Abstellplatz 33 einer in Ausfahrrichtung - gemäß Pfeil 28 - des Oberschlittens 30 betrachtet, vorderen Tiefenposition entspricht.

Beim Auslagervorgang stützt sich der zu entnehmende Behälter mit seiner ebenflächigen Unterseite 106 auf der horizontalen Stellfläche 35 ab. Die seitlich neben dem Regalfach 9 senkrecht und entlang der Regalgasse 6 verfahrbare Lastaufnahmevorrichtung 23 wird soweit verfahren, bis sich die Auflagefläche 74 etwas höher als die Unterseite 106 des Behälters bzw. als die Stellfläche 35 des Regalfaches 9 befindet. Nach Betätigen des Verschiebemotors 26 wird die Trageinrichtung 24, daher Grundrahmen 25, Koppelungs- und Oberschlitten 29, 30, zusammen mit den Fördermitteln 32 seitlich in Ausfahrrichtung - gemäß Pfeil 28 - wahlweise nach rechts oder links teleskopartig unter den Behälter ausgefahren.

Die synchron angetriebenen Fördermittel 32 werden über den Fördermotor 31 auflageseitig entgegen der Ausfahrrichtung - gemäß Pfeil 28 - des Oberschlittens 30 in Förderrichtung - gemäß eingetragenem Pfeil 107 - angetrieben. Die Fördergeschwindigkeit der Auflagefläche 74 der Fördermittel 32 in Förderrichtung - gemäß Pfeil 107 - entspricht dabei betragsmäßig der Ausfahrgeschwindigkeit in Ausfahrrichtung - gemäß Pfeil 28 - des Oberschlittens 30 und bleibt nach der Anlaufphase während der gesamten Dauer der Ausfahrbewegung des Oberschlittens 30 konstant aufrechterhalten.

Das in Ausfahrrichtung - gemäß Pfeil 28 - vordere Ende des Oberschlittens 30 ist mit einer auf das Niveau der Auflagefläche 74 ansteigenden Auflaufhilfe 108 versehen. Während der Ausfahrbewegung des Oberschlittens 30 unterfahren die Fördermittel 32 den Behälter, wobei sich die keilförmige Auflaufhilfe 108 unter diesen Behälter schieben und diesen hochhebt, sodass er auf den Fördermitteln 32 teilweise aufliegt und durch die fortwährende Ausfahrbewegung des Oberschlittens 30 der Behälter von der Stellfläche 35 auf das Niveau der Auflagefläche 74 angehoben wird. Da die Fördergeschwindigkeit der Ausfahrgeschwindigkeit entspricht, rollen die Fördermittel 32 an der Unterseite 106 des Behälters ohne Relativverschiebung zum Behälter ab, wodurch dieser am Ende der Ausfahrbewegung vollständig von der Stellfläche 35 auf das Niveau der Auflagerfläche 74 der Fördermittel 32 abgehoben wird. Da Relativverschiebungen zwischen dem Behälter und den Fördermitteln 32 vermieden werden, wirken auf die Behälter keine großen Kräfte ein, welche zu Stauchungen der Behälter oder anderen Beschädigungen durch Krafteinwirkung führen würden. Die Auflaufhilfe 108, insbesondere eine Auflaufschräge, kann durch den stirnseitigen Umlenkbereich der Fördermittel 32 oder durch in den Endbereichen des Oberschlittens 32 jeweils zumindest eine gegenüber die Fördermittel 32 tiefer angeordnete Auflaufrolle gebildet werden. Bevorzugt sind in jedem Endbereich des Oberschlittens 32 zwei jeweils den Fördermitteln 32 in Ausfahrrichtung - gemäß Pfeil 28 - nachgeordnete und gegenüber den Fördermitteln 32 tiefer gesetzte Auflaufrollen angeordnet. Der Durchmesser der am Oberschlitten 32 gelagerten Auflaufrollen ist bevorzugt kleiner als der der Umlenkrollen 51 und verläuft eine horizontale Längsachse der Auflaufrolle senkrecht zur Längserstreckung des Oberschlittens 32.

Gleichzeitig oder zeitlich versetzt zur Ausfahrbewegung - gemäß Pfeil 28 - des Koppelungs-und Oberschlittens 29, 30, wird der diese lagernde Grundrahmen 25 über den Verschiebe-und/oder Verstellantrieb 62; 67 in Richtung der Ausfahrbewegung - gemäß Pfeil 28 - um den vorbestimmbaren Verstellweg 73 verstellt. Dadurch ist es nunmehr aber auch bei Lastaufnahmevorrichtungen 23 mit jenen Trageinrichtungen 24, die einen durch den Fördermittel- und/oder Verschiebeantrieb 52, 62 konstruktiv bedingten Überlappungsbereich 64, der die maximale Ausschublänge 63 des vollständig ausgefahrenen Oberschlittens 30 gegenüber dem Grundrahmen 25 begrenzt, ausbilden, möglich, den am gassenfernen Abstellplatz 34 und zur Regalgasse 6 am weitesten entfernt abgelegten Behälter mit den Fördermitteln 32 bzw. dem Oberschlitten 30 annähernd vollständig zu unterfahren. Dabei wird, bevor das zumindest eine Ladehilfsmittel 10 von der Stellfläche 35 aus dem Regalfach 9 von den Fördermitteln 32 übernommen wird, der Grundrahmen 25 in Ein- bzw. Ausfahrrichtung - gemäß Pfeil 27, 28 ― etwa um die Länge des Überlappungsbereiches 64 verstellt.

Beim Einlagervorgang liegt der in das Regalfach 9, beispielsweise an den zweiten Abstellplatz 34 im Regalfach 9 zu übergebende Behälter auf der Auflagefläche 74 der Fördermittel 32 auf. Die in strichlierte Linien gezeigte Lausaufnahmevorrichtung 23 ist soweit verfahren, bis sich die zur Aufnahme des Behälters bestimmte Stellfläche 35 etwas unterhalb der Auflagefläche 74 bzw. der Unterseite 106 des Behälters befindet. Der Grundrahmen 25, Koppelungs- und Oberschlitten 29, 30 mit den Fördermitteln 32 und der darauf aufliegende zumindest eine Behälter werden relativ zur Hubplattform 22 in Ausfahrrichtung - gemäß Pfeil 28 - über der Stellfläche 35 ausgefahren, bis sich der Behälter vollständig oberhalb der Stellfläche 35 vom Abstellplatz 34 befindet. Danach wird der Koppelungs- und Oberschlitten 29, 30 zusammen mit den Fördermitteln 32 in Einfahrrichtung ― gemäß Pfeil 27 - zurückgezogen, wobei gleichzeitig die Fördermittel 32 auflageseitig über den Fördermittelantrieb 52 entgegen der Einfahrrichtung ― gemäß Pfeil 27 - in Förderrichtung - gemäß Pfeil 107 - angetrieben werden. Die Fördergeschwindigkeit entspricht betragsmäßig der Einfahrgeschwindigkeit, sodass die Fördermittel 32 an der Unterseite 106 des Behälters ohne Relativverschiebung zum Behälter abrollt. Dem Behälter wird seine Auflage auf den Fördermitteln 32 entzogen, sodass er mit seinem in Einfahrrichtung - gemäß Pfeil 27 - hinteren Ende auf die tiefer gelegene Stellfläche 35 kippt. Der Einlagervorgang ist beendet, wenn der Behälter vollständig auf der Stellfläche 35 aufliegt und die Fördermittel 32 mit dem Oberschlitten 30 vollständig unter dem Behälter fortbewegt ist. Dabei wird, bevor das zumindest eine Ladehilfsmittel 10 von den Fördermitteln 32 auf die Stellfläche 35 im Regalfach 9 abgelegt wird, der Grundrahmen 25 in Ein- bzw. Ausfahrrichtung - gemäß Pfeil 27, 28 - etwa um die Länge des Überlappungsbereiches 64 verstellt.

Es sei erwähnt, dass während der Einfahrbewegung beim Auslagervorgang und Ausfahrbewegung beim Einlagervorgang die Fördermittel 32 mit dem zumindest einem darauf abgesetzten Behälter stillgesetzt oder mit einer gegenüber der Ein- und Ausfahrgeschwindigkeit niedrigeren Fördergeschwindigkeit angetrieben sind, wobei dann die Förderrichtung der Ein- bzw. Ausfahrrichtung - gemäß Pfeil 27, 28 - entspricht. Ebenfalls ist es möglich, dass gleichzeitig zwei Behälter mittels der Trageinrichtung 24 ein- oder ausgelagert werden. Da der Fördermotor 31 und Verschiebemotor 26 des Fördermittelantriebes 52 und Verschiebeantriebes 62 getrennt ansteuerbar sind, können auch die Ein- und Ausfahrbewegung der Trageinrichtung 24, insbesondere des Oberschlittens 30, und Vorschubbewegung von den synchron laufenden Fördermitteln 32 getrennt angesteuert werden.

Die Ausführungsbeispiele zeigen mögliche Ausführungsvarianten der Lastaufnahmevorrichtung 23, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt, solange, dass sie im Rahmen der Ansprüche bleiben. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Lastaufnahmevorrichtung 23 diese bzw. deren Bestandteile teilweise unmaßstäblich und/oder vergrößert und/oder verkleinert dargestellt wurden.

### Bezugszeichenaufstellung

- 1: Lagersystem
- 2: Regallager
- 3: Regallager
- 4: Ein- bzw. Auslagerungsseite
- 5: Ein- bzw. Auslagerungsseite

- 6: Regalgasse
- 7: Gassenbreite
- 8: Tiefe
- 9: Regalfach
- 10: Ladehilfsmittel

- 11: Fördereinrichtung
- 12: Führungsbahn
- 13: Führungsbahn
- 14: Fahrwerk
- 15: Fahrwerk

- 16: Aufstandsfläche
- 17: Decke
- 18: Antriebsanordnung
- 19: Mast
- 20: Führungsanordnung

- 21: Hubantrieb
- 22: Hubplattform
- 23: Lastaufnahmevorrichtung
- 24: Trageinrichtung
- 25: Grundrahmen

- 26: Verschiebemotor
- 27: Pfeil
- 28: Pfeil
- 29: Koppelungsschlitten
- 30: Oberschlitten

- 31: Fördermotor
- 32: Fördermittel
- 33: Abstellplatz
- 34: Abstellplatz
- 35: Stellfläche

- 36: Winkelprofil
- 37: Regalsteher
- 38:
- 39:
- 40:

- 41:
- 42:
- 43: Doppelpfeil
- 44: Basis
- 45: Basisprofil

- 46: Profilschenkel
- 47: Profilschenkel
- 48: Laufrolle
- 49: Achszapfen
- 50: Umlenkrolle

- 51: Umlenkrolle
- 52: Fördermittelantrieb
- 53: Fortsatz
- 54: Laufrolle
- 55: Laufbahn

- 56: Obergurt
- 57: Untergurt
- 58: Steg
- 59: Laufbahn
- 60: Schenkel

- 61:
- 62: Verschiebeantrieb
- 63: Ausschublänge
- 64: Überlappungsbereich
- 65: Stirnseite

- 66: Stirnseite
- 67: Verstellantrieb
- 68: Linearführungsvorrichtung
- 69: Führungsholm
- 70: Schlitten

- 71: Symmetrieebene
- 72: Seitenbegrenzung
- 73: Verstellweg
- 74: Auflagefläche
- 75: Zugmittel

- 76: Zugmittel
- 77: Antriebsrad
- 78: Umlenkrolle
- 79: Umlenkrolle
- 80: Koppelwelle

- 81: Antriebsrolle
- 82: Umlenkrolle
- 83: Antriebswelle
- 84: Drehbewegungsübertragungsglied
- 85: Ende

- 86: Ende
- 87: Zugmittel
- 88: Antriebsrad
- 89: Umlenkrolle
- 90: Zugmittel

- 91: Antriebsrad
- 92: Umlenkrolle
- 93: Befestigungspunkt
- 94: Zugmittel
- 95: Umlenkrolle

- 96: Mitnahmeorgan
- 97: Mitnahmeorgan
- 98: Ausfahrlänge
- 99: Verstellmotor
- 100: Lagerbock

- 101: Gewindespindel
- 102: Spindelmutter
- 103: Zahnstange
- 104: Zahnstange
- 105:

- 106: Unterseite
- 107: Pfeil
- 108: Auflaufhilfe
- 109: Stirnfläche

## Patentansprüche

1. Lastaufnahmevorrichtung (23), insbesondere zum Ein- und Auslagern von Ladehilfsmitteln (10) in bzw. aus einem Regalfach (9) eines Regallagers (2, 3) mit einer seitlich neben dem Regallager (2, 3) verstellbaren Hubplattform (22), mit einer auf der Hubplattform (22) gelagerten Trageinrichtung (24) für die bedarfsweise Aufnahme zumindest eines Ladehilfsmittels (10), die einen Grundrahmen (25) und über zumindest einen Verschiebeantrieb (62) in Ein- bzw. Ausfahrrichtung (27, 28) synchron und relativ zum Grundrahmen (25) verstellbare Koppelungs- und Oberschlitten (29, 30), **dadurch gekennzeichnet, dass** die Lastaufnahmevorrichtung (23) wenigstens ein am Oberschlitten (30) gelagertes Fördermittel (32), insbesondere ein Förderband, zum Transport des Ladehilfsmittels (10) mittels Reibschluss aufweist, welches Fördermittel (32) mit einem Fördermittelantrieb (52) gekuppelt ist, der zwei Zugmitteltriebe umfasst, wovon ein erstes Zugmittel (75) vom ersten Zugmitteltrieb umlaufend von einem am Grundrahmen (25) gelagerten, von einem Fördermotor (31) antreibbaren Antriebsrad (77) über zwei zu dessen beiden Seiten am Grundrahmen (25) gelagerte Umlenkrollen (78) und zwei an den Enden des Koppelungsschlittens (29) gelagerte Umlenkrollen (79) geführt ist und ein zweites Zugmittel (76) vom zweiten Zugmitteltrieb an zwei am Oberschlitten (30) gelagerte Umlenkrollen (50) umgelenkt und bewegungsmäßig mit dem Koppelungsschlitten (29) gekoppelt ist, und der Grundrahmen (25), Koppelungs-und Oberschlitten (29, 30) jeweils mit einer in etwa gleichen Länge ausgebildet und zueinander geführt sind und eine maximale Ausschublänge (63) des ausgefahrenen Oberschlittens (30) zwischen in Ausfahrrichtung (28) vorderen Stirnseiten des Grundrahmens (25) und Oberschlittens (30) geringer als die Länge des Grundrahmens (25) und durch einen aus der Umlenkung der Zugmitteln (75, 76) an den Umlenkrollen (50, 79) resultierenden Überlappungsbereich (64) zwischen entgegengesetzten Stirnseiten (65, 66) des Grundrahmens (25) und Oberschlittens (30) begrenzt ist, wobei mittels dem Oberschlitten (29, 30) in Ausfahrrichtung (28) betrachtet, mindestens zwei hintereinander liegende Tiefenpositionen für die Ladehilfsmitteln (10) im Regalfach (9) des Regallagers (2, 3) anfahrbar sind und wobei der Fördermittel- und Verschiebeantrieb (52, 62) getrennt ansteuerbare und auf der Hubplattform (22) befestigte Motoren (31, 26) aufweist und das zweite Zugmittel (76) vom zweiten Zugmitteltrieb für den Fördermittelantrieb (52) umlaufend um eine am Oberschlitten (30) gelagerte und vom ersten Zugmittel (75) antreibbare, erste Umlenkrolle (50) und eine an einem Ende des Oberschlittens (30) gelagerte, zweite Umlenkrolle (50) geführt ist und mittels dem zweiten Zugmittel (76) und der zweiten Umlenkrolle (50) das Fördermittel (32) antreibbar ist und wobei der Verschiebeantrieb (62) zumindest einen mit dem Verschiebemotor (26) gekuppelten und von den Zugmitteltrieben für den Fördermittelantrieb (52) getrennt angeordneten Zugmitteltrieb umfasst und wobei zwischen der Trageinrichtung (24), insbesondere dem Grundrahmen (25), und der Hubplattform (22) wenigstens ein Verstellantrieb (67) und eine zur Ein- bzw. Ausfahrrichtung (27, 28) parallel verlaufende Linearführungsvorrichtung (68) angeordnet ist und wobei die Trageinrichtung (24) entlang der Linearführungsvorrichtung (68) geführt und über den Verstellantrieb (67) in Ein- bzw. Ausfahrrichtung (27, 28) um etwa die Länge des Überlappungsbereiches (64) verstellbar ist, derart, dass das Fördermittel (32) bis mindestens zu einer in Ausfahrrichtung (28) betrachtet, hinteren Stirnfläche (109) eines im Regalfach (9) abgestellten Ladehilfsmittels (10) ausfahrbar ist und dabei das Ladehilfsmittel (10) in Ein- bzw. Ausfahrrichtung (27, 28) an seiner Unterseite vollständig unterfährt.

2. Lastaufnahmevorrichtung nach Anspruch 1, **dadurch gekennzeichnet, dass** der Verstellantrieb (67) getrennt vom Verschiebeantrieb (62) ausgebildet ist und einen pneumatisch, hydraulisch oder elektrisch betätigten Linearantrieb aufweist.

3. Lastaufnahmevorrichtung nach Anspruch 2, **dadurch gekennzeichnet, dass** der Linearantrieb die Linearführungsvorrichtung (68) aufweist.

4. Lastaufnahmevorrichtung nach Anspruch 2, **dadurch gekennzeichnet, dass** der Linearantrieb einen Verstellmotor (99) aufweist und dass der Verschiebe-, Förder- und/oder Verstellmotor (26, 31, 99) vom Verschiebe-, Fördermittel- und/oder Verstellantrieb (62, 52, 67) synchronisiert sind.

5. Lastaufnahmevorrichtung nach Anspruch 1, **dadurch gekennzeichnet, dass** der Verstellantrieb (67) durch den Verschiebeantrieb (62) gebildet ist.

6. Lastaufnahmevornchtung nach Anspruch 5, **dadurch gekennzeichnet, dass** der Verschiebeantrieb (62) ein am Grundrahmen (25) gelagertes und mit dem auf der Hubplattform (22) ortsfest angeordneten Verschiebemotor (26) gekuppeltes, erstes Antriebsrad (88) sowie ein zwischen dem Grundrahmen (25) und der Hubplattform (22) angeordnetes und in das erste Antriebsrad (88) eingreifendes bzw. anliegendes, erstes Übertragungsmittel aufweist.

7. Lastaufnahmevorrichtung nach Anspruch 6, **dadurch gekennzeichnet, dass** das erste Antriebsrad (88) durch ein Zahnrad oder eine Zahnscheibe und das erste Übertragungsmittel durch eine auf der Hubplattform (22) parallel zur Ein- bzw. Ausfahrrichtung (27, 28) befestigte Zahnstange (103) oder eine linear gespannte Kette oder einen Zahnriemen gebildet ist.

8. Lastaufnahmevorrichtung nach Anspruch 6, **dadurch gekennzeichnet, dass** das erste Antriebsrad (88) durch ein Reibrad und das erste Übertragungsmittel durch eine auf der Hubplattform (22) parallel zur Ein- bzw. Ausfahrrichtung (27, 28) angeordnete Reibfläche gebildet ist.

9. Lastaufnahmevorrichtung nach Anspruch 6, **dadurch gekennzeichnet, dass** das erste Übertragungsmittel durch ein erstes Zugmittel (87) gebildet ist, das von dem ersten Antriebsrad (88) über zwei ortsfest am Grundrahmen (25) angeordnete Umlenkrollen (89) geführt ist und die beiden Enden (85) des ersten Zugmittels (87) an Befestigungspunkten (93) mit der Hubplattform (22) fest verbunden sind.

10. Lastaufnahmevorrichtung nach Anspruch 1, 5 oder 6, **dadurch gekennzeichnet, dass** der Verschiebeantrieb (62) ein am Grundrahmen (25) gelagertes und mit demselben Verschiebemotor (26) gekuppeltes, zweites Antriebsrad (91) sowie ein zwischen dem Grundrahmen (25) und dem Koppelungsschlitten (29) angeordnetes und in das zweite Antriebsrad (91) eingreifendes bzw. anliegendes, zweites Übertragungsmittel aufweist.

11. Lastaufnahmevorrichtung nach Anspruch 10, **dadurch gekennzeichnet, dass** das zweite Antriebsrad (91) durch ein Zahnrad oder eine Zahnscheibe und das zweite Übertragungsmittel durch eine am Koppelungsschlitten (29) parallel zur Ein- bzw. Ausfahrrichtung (27, 28) befestigte Zahnstange (104) oder eine linear gespannte Kette oder einen Zahnriemen gebildet ist.

12. Lastaufnahmevorrichtung nach Anspruch 10, **dadurch gekennzeichnet, dass** das zweite Antriebsrad (91) durch ein Reibrad und das zweite Übertragungsmittel durch eine am Koppelungsschlitten (29) parallel zur Ein- bzw. Ausfahrrichtung (27, 28) angeordnete Reibfläche gebildet ist.

13. Lastaufnahmevorrichtung nach Anspruch 10, **dadurch gekennzeichnet, dass** das zweite Übertragungsmittel durch ein zweites Zugmittel (90) gebildet ist, das vom zweiten Antriebsrad (91) über zwei etwa mittig am Grundrahmen (25) angeordnete Umlenkrollen (92) zu in Ausfahrrichtung (28) der teleskopierbaren Trageinrichtung (24) an den Enden des Koppelungsschlittens (29) angeordneten Befestigungspunkten (93) geführt und die beiden Enden (86) des zweites Zugmittels (90) mit dem Koppelungsschlitten (29) fest verbunden sind.

14. Lastaufnahmevorrichtung nach Anspruch 5, **dadurch gekennzeichnet, dass** der Verschiebeantrieb (62) ein drittes Zugmittel (94) aufweist, das endlos umlaufend um zwei in Ausfahrrichtung (28) der teleskopierbaren Trageinrichtung (24) an den Enden des Koppelungsschlittens (29) gelagerte Umlenkrollen (95) geführt und der Koppelungsschlitten (29) über ein erstes Mitnahmeorgan (96) mit dem Grundrahmen (25) sowie der Oberschlitten (30) über ein weiteres Mitnahmeorgan (97) mit dem Koppelungsschlitten (29) bewegungsmäßig mechanisch verbunden ist, wobei das erste Mitnahmeorgan (96) an einem dem Grundrahmen (25) zugewandten, unteren Trum des dritten Zugmittels (94) und einem Rahmen vom Grundrahmen (25) und das weitere Mitnahmeorgan (97) an einem dem Oberschlitten (30) zugewandten, oberen Trum und einem Rahmen vom Oberschlitten (30) befestigt ist.

15. Lastaufnahmevorrichtung nach einem der Ansprüche 6 bis 13, **dadurch gekennzeichnet, dass** die Antriebsräder (88, 91) ein Übersetzungsgetriebe bilden und auf einer gemeinsamen Antriebswelle angeordnet sind und dass die Antriebswelle über ein Drehbewegungsübertragungsglied (84), insbesondere eine kardanische Welle, mit dem auf der Hubplattform (22) ortsfest angeordneten Verschiebemotor (26) gekoppelt ist.

16. Lastaufnahmevorrichtung nach Anspruch 1, **dadurch gekennzeichnet, dass** der Grundrahmen (25) der Trageinrichtung (24) auf der Hubplattform (22) angeordnet ist und in Bezug auf die Hubplattform (22) nach beide Richtungen bis über die voneinander abgewandten Seitenbegrenzungen (72) der Hubplattform (22) hinaus um etwa die Länge des Überlappungsbereiches (64) verstellbar ausgebildet ist.

17. Lastaufnahmevorrichtung nach Anspruch 1 oder 16, **dadurch gekennzeichnet, dass** ein Verstellweg (73) des Grundrahmens (25) parallel zur Ein- bzw. Ausfahrrichtung (27, 28) zumindest der Länge des Überlappungsbereiches (64) entspricht und etwa zwischen 130 mm und 250 mm, insbesondere 150 mm und 200 mm, beispielsweise 170 mm, beträgt.

18. Lastaufnahmevorrichtung nach Anspruch 1, **dadurch gekennzeichnet, dass** die Linearführungsvorrichtung (68) zumindest einen in Ein- bzw. Ausfahrrichtung (27, 28) verlaufenden und auf der Hubplattform (22) ortsfest befestigten Führungsholm (69) und zumindest einen am Grundrahmen (25) befestigten Schlitten (70) aufweist, wobei die Trageinrichtung (24) über den Schlitten (70) auf dem Führungsholm (69) gelagert ist.

19. Verfahren, insbesondere zum Ein- und Auslagern von Ladehilfsmitteln (10) in bzw. aus einem Regalfach (9) eines Regallagers (2, 3) mittels einer, eine Trageinrichtung (24) mit einem Grundrahmen (25) und in Ein- bzw. Ausfahrrichtung (27, 28) synchron zueinander und relativ zum Grundrahmen (25) verstellbaren Koppelungs- und Oberschlitten (29, 30) sowie zumindest einem am Oberschlitten (30) angeordneten, antreibbaren Fördermittel (32) aufweisenden und auf einer verstellbaren Hubplattform (22) angeordneten Lastaufnahmevorrichtung (23) nach einem der Ansprüche 1 bis 18, bei dem zum Auslagern der Oberschlitten (29, 30) mit dem über Zugmitteln (75, 76) angetriebenen, umlaufenden Fördermittel (32) der vor dem Regalfach (9) positionierten Trageinrichtung (24) unter zumindest ein auf einer Stellfläche (35) im Regalfach (9) abgelegtes Ladehilfsmittel (10) in Ausfahrrichtung (28) bis maximal auf eine durch einen aus der Umlenkung der Zugmitteln (75, 76) an Umlenkrollen (50, 79) resultierenden Überlappungsbereich (64) zwischen entgegengesetzten Stirnseiten (65, 66) des Grundrahmens (25) und Oberschlittens (30) begrenzte Ausschublänge (63) ausfährt, das Fördermittel (32) das Ladehilfsmittel (10) aufnimmt und darauffolgend der Oberschlitten (29, 30) wieder in Einfahrrichtung (27) zurückfährt und bei dem zum Einlagern der Oberschlitten (29, 30) der Trageinrichtung (24) mit dem auf dem Fördermittel (32) abgesetzten Ladehilfsmittel (10) in Ausfahrrichtung (28) bis maximal auf die durch den aus der Umlenkung der Zugmitteln (75, 76) an Umlenkrollen (50, 79) resultierenden Überlappungsbereich (64) zwischen entgegengesetzten Stirnseiten (65, 66) des Grundrahmens (25) und Oberschlittens (30) begrenzte Ausschublänge (63) ausfährt, das Fördermittel (32) das Ladehilfsmittel (10) auf die Stellfläche (35) an das Regalfach (9) übergibt und darauffolgend der Oberschlitten (29, 30) wieder in Einfahrrichtung (27) zurückfährt, **dadurch gekennzeichnet, dass** beim Aus- und Einlagern eines Ladehilfsmittels (10) vom Oberschlitten (30) in Ausfahrrichtung (28) betrachtet, eine vordere oder hintere Tiefenposition angefahren und vom umlaufenden Fördermittel (32) ein an der vorderen oder hinteren Tiefenposition abgestelltes Ladehilfsmittel (10) auf den Oberschlitten (30) aufgenommen oder ein Ladehilfsmittel (10) vom Oberschlitten (30) am Regalfach (9) an der vorderen oder hinteren Tiefenposition abgelegt wird, wobei die Ein- und Ausfahrbewegung des Oberschlittens (30) und Vorschubbewegung vom zumindest einen Fördermittel (32) über zwei auf der Hubplattform (22) angeordnete Motoren (31,26) getrennt angesteuert werden und dass die Trageinrichtung (24), insbesondere der Grundrahmen (25), zusätzlich zur Ein- und Ausfahrbewegung des Oberschlittens (30) relativ zur Hubplattform (22) in Ein- bzw. Ausfahrrichtung (27, 28) um etwa die Länge des Überlappungsbereiches (64) verstellt wird, derart, dass das Fördermittel (32) bis mindestens zu einer in Ausfahrrichtung (28) betrachtet, hinteren Stirnfläche (109) eines im Regalfach (9) abgestellten Ladehilfsmittels (10) ausfährt und dabei das Ladehilfsmittel (10) in Ein- bzw. Ausfahrrichtung (27, 2 8) an seiner Unterseite vollständig unterfährt.

20. Fördereinrichtung (11), insbesondere Regalbediengerät, mit einer im Wesentlichen vertikal und horizontal verstellbaren Hubplattform (22) und zumindest einer auf der Hubplattform (22) angeordneten Lastaufnahmevorrichtung (23), **dadurch gekennzeichnet, dass** die zumindest eine Lastaufnahmevorrichtung (23) nach einem der Ansprüche 1 bis 18 ausgebildet ist.

## Claims

1. Load bearing device (23), in particular for loading and unloading loading means (10) into or out of a rack compartment (9) of a rack system (2, 3) with an adjustable lifting platform (22) laterally adjacent to the rack system (2, 3), having a bearing device (24) mounted on the lifting platform (22) for accommodating, as necessary, at least one loading means (10), which comprises a base frame (25) and coupling and upper slides (29, 30) which can be displaced in the inward and outward travel direction (27, 28) synchronously and relative to the base frame (25) by means of at least one displacement drive (62), **characterised in that** the load bearing device (23) has at least one conveyor means (32) mounted on the upper slide (30), in particular a conveyor belt, for transporting the loading means (10) by means of a frictional grip, which conveyor means (32) is coupled with a conveyor drive (52) comprising two pulley drives, of which a first pulley means (75) is guided by a first pulley drive circulating by means of a driving gear (77) mounted on the base frame (25) and driveable by a conveyor motor (31) across two pulley blocks (78) mounted at the two ends of the base frame (25) and two pulley blocks (79) mounted at the ends of the coupling slide (29), and a second pulley means (76) of the second pulley drive is guided on two pulley blocks (50) mounted on the upper slide (30) and is displaceably coupled with the coupling slide (29), and the base frame (25), coupling and upper slide (29, 30) are each of approximately the same length as one another and are guided with respect to one another, and a maximum extraction length (63) of the upper slide (30) extracted between terminal ends of the base frame (25) and upper slide (30) disposed at the front in the outward travel direction (28) is shorter than the length of the base frame (25) and is delimited by an overlap region (64) resulting from the turning of the pulley means (75, 76) on the pulley blocks (50, 79) between opposing end faces (65, 66) of the base frame (25) and upper slide (30), and the upper slide (29, 30), as viewed in the outward travel direction (28), is able to cause a movement towards at least two depth positions lying behind one another for the loading means (10) in the rack compartment (9) of the rack system (2, 3), and the conveyor and displacement drive (52, 62) has motors (31, 26) which can be activated separately and are secured to the lifting platform (22), and the second pulley means (76) is guided by the second pulley drive for the conveyor drive (52) around a first pulley block (50) mounted on the upper slide (30) and driven by the first pulley means (75) and a second pulley block (50) mounted at one end of the upper slide (30), and the conveyor means (32) can be driven by means of the second pulley means (76) and the second pulley block (50), and the displacement drive (62) comprises at least one pulley drive coupled with the displacement motor (26) and disposed separately from the pulley drives for the conveyor drive (52), and at least one actuator drive (67) and a linear guide mechanism (68) extending parallel with the inward and outward travel direction (27, 28) are disposed between the bearing device (24), in particular the base frame (25) and the lifting platform (22), and the bearing device (24) is guided along the linear guide mechanism (68) and can be displaced by the actuator drive (67) in the inward and outward travel direction (27, 28) by about the length of the overlap region (64) so that the conveyor means (32) can be extracted at least as far as a rear end face (109), as viewed in the outward travel direction (28), of a loading means (10) deposited in the rack compartment (9) and thus moves completely underneath the bottom face of the loading means (10) in the inward and outward travel direction (27, 28).

2. Load bearing device according to claim 1, **characterised in that** the actuator drive (67) is provided separately from the displacement drive (62) and comprises a pneumatically, hydraulically or electrically operated linear drive.

3. Load bearing device according to claim 2, **characterised in that** the linear drive comprises the linear guide mechanism (68).

4. Load bearing device according to claim 2, **characterised in that** the linear drive comprises an actuating motor (99) and the displacement, conveyor and/or actuator motor (26, 31, 99) are synchronised by the displacement, the conveyor and/or actuator drive (62, 52, 67).

5. Load bearing device according to claim 1, **characterised in that** the actuator drive (67) is formed by the displacement drive (62).

6. Load bearing device according to claim 5, **characterised in that** the displacement drive (62) comprises a first driving gear (88) mounted on the base frame (25) and coupled with the displacement motor (26) secured to the lifting platform (22) and a first transmission means disposed between the base frame (25) and the lifting platform (22) which engages with or abuts with the first driving gear (88).

7. Load bearing device according to claim 6, **characterised in that** the first driving gear (88) is formed by a toothed wheel or a toothed disc and the first transmission means is formed by a gear rack (103) secured to the lifting platform (22) parallel with the inward or outward drive direction (27, 28), or a linearly tensioned chain or a toothed belt.

8. Load bearing device according to claim 6, **characterised in that** the first driving gear (88) is provided in the form of a friction gear and the first transmission means by a friction surface disposed on the lifting platform (22) parallel with the inward or outward travel direction (27, 28).

9. Load bearing device according to claim 6, **characterised in that** the first transmission means is provided in the form of a first pulley means (87), which is guided by the first driving gear (88) over two pulley blocks (89) secured to the base frame (25), and the two ends (85) of the first pulley means (87) are fixedly connected to the lifting platform (22) at anchoring points (93).

10. Load bearing device according to claim 1, 5 or 6, **characterised in that** the displacement drive (62) comprises a second driving gear (91) mounted on the base frame (25) and coupled with the same displacement motor (26), and a second transmission means disposed between the base frame (25) and the coupling slide (29) and engaging or abutting with the second driving gear (91).

11. Load bearing device according to claim 10, **characterised in that** the second driving gear (91) is provided in the form of a toothed wheel or a toothed disc and the second transmission means is formed by a gear rack (104) secured to the coupling slide (29) parallel with the inward or outward travel direction (27, 28) or a linearly tensioned chain or a toothed belt.

12. Load bearing device according to claim 10, **characterised in that** the second driving gear (91) is provided in the form of a friction gear and the second transmission means is provided in the form of a friction surface disposed on the coupling slide (29) parallel with the inward or outward travel direction (27, 28).

13. Load bearing device according to claim 10, **characterised in that** the second transmission means is provided in the form of a second pulley means (90), which is guided by the second driving gear (91) over two pulley blocks (92) disposed centrally on the base frame (25) to anchoring points (93) disposed in the outward travel direction (28) of the telescopic support device (24) at the ends of the coupling slide (29), and the two ends (86) of the second pulley means (90) are fixedly connected to the coupling slide (29).

14. Load bearing device according to claim 5, **characterised in that** the displacement drive (62) comprises a third pulley means (94), which is guided as it circulates endlessly around two pulley blocks (95) mounted at the ends of the coupling slide (29) in the outward travel direction (28) of the telescopic bearing device (24), and the coupling slide (29) is connected via a first driving element (96) to the base frame (25) and the upper slide (30) is connected via another driving element (97) to the coupling slide (29) so, as to be mechanically displaceable, and the first driving element (96) is secured to a bottom strand of the third pulley means (94) facing the base frame (25) and a frame of the base frame (25), and the other driving element (97) is secured to a top strand facing the upper slide (30) and a frame of the upper slide (30).

15. Load bearing device according to one of claims 6 to 13, **characterised in that** the driving gears (88, 91) form a transmission and are disposed on a common drive shaft, and in drive shaft is coupled via a rotary transmission member (84), in particular a cardan shaft, with the displacement motor (26) disposed in a fixed manner on the lifting platform (22).

16. Load bearing device according to claim 1, **characterised in that** the base frame (25) of the bearing device (24) is disposed on the lifting platform (22) and is designed to be displaceable relative to the lifting platform (22) in two directions to beyond the mutually remote lateral boundaries (72) of the lifting platform (22) by about the length of the overlap region (64).

17. Load bearing device according to claim 1 or 16, **characterised in that** a displacement path (73) of the base frame (25) parallel with the inward or outward travel direction (27, 28) corresponds to at least the length of the overlap region (64) and is between about 130 mm and 250 mm, in particular 150 mm and 200 mm, for example 170 mm.

18. Load bearing device according to claim 1, **characterised in that** the linear guide mechanism (68) comprises at least one guide bar (69) extending in the inward or outward travel direction (27, 28) and secured to the lifting platform (22), and at least one slide (70) secured to the base frame (25), and the bearing device (24) is mounted on the guide bar (69) by means of the slide (70).

19. Method, in particular for loading and unloading loading means (10) into or out of a rack compartment (9) of a rack system (2, 3), by means of a bearing device (24) with a base frame (25) and coupling and upper slides (29, 30) which can be displaced synchronously with one another and relative to the base frame (25) in an inward and outward travel direction (27, 28), and at least one driveable conveyor means (32) disposed on the upper slide (30) and a load bearing device (23) displaced on an adjustable lifting platform (22) according to one of claims 1 to 18, whereby, for unloading purposes, 8 the upper slide (29, 30) with the circulating conveyor means (32) driven over pulleys (75, 76) of the bearing device (24) positioned in front of the rack compartment (9) is extracted underneath at least one loading means (10) deposited on a positioning surface (35) in the rack compartment (9) in the outward travel direction (28) until it reaches a maximum extraction length (63) defined by an overlap region (64) resulting from the deflection of the pulleys (75, 76) on pulley blocks (50, 79) between opposing end faces (65, 66) of the base frame (25) and upper slide (3), the conveyor means (32) picks up the loading means (10), and then the upper slide (29, 30) moves back in the inward travel direction (27), and for loading purposes, the upper slide (29, 30) of the bearing device (24) with the loading means (10) deposited on the conveyor means (32) is extracted in the outward travel direction (28) at most as far as the extraction length (63) delimited by the overlap region (64) between opposing end faces (65, 66) of the base frame (25) and upper slide (30) resulting from the deflection of the pulley means (75, 76) on pulley blocks (50, 79), the conveyor means (32) transfers the loading means (10) onto the storage surface (35) on the rack compartment (9) and then the upper slide (29, 30) returns in the inward travel direction (27), **characterised in that** during the unloading and loading of a loading means (10) by the upper slide (3), a front or rear depth position, as viewed in the outward travel direction (28), is approached and a loading means (10) deposited at the front or rear depth position by the circulating conveyor means (32) is taken onto the upper slide (30), or a loading means (10) is deposited by the upper slide (30) on the rack compartment (9) at the front or rear depth position, during which the inward and outward movement of the upper slide (30) and forward movement of at least one conveyor means (32) are activated separately by two motors (31, 26) disposed on the lifting platform (22), and the bearing device (24), in particular the base frame (25), is moved in addition to the inward and outward movement of the upper slide (30) relative to the lifting platform (22) in the inward or outward travel direction (27, 28) by about the length of the overlap region (64), so that the conveyor means (32) is extracted at least as far as a rear end face (109), as viewed in the outward travel direction (28), of a loading means (10) deposited in the shelf compartment (9), and thus moves completely underneath the bottom face of the loading means (10) in the inward and outward travel direction (27, 28).

20. Conveyor device (11), in particular a rack servicing system, with an essentially vertically and horizontally adjustable lifting platform (22) and at least one load bearing device (23) disposed on the lifting platform (22), **characterised in that** the at least one load bearing device (23) is designed according to one of claims 1 to 18.

## Revendications

1. Dispositif de réception de charge (23), en particulier pour le stockage et le déstockage de moyens auxiliaires de chargement (10) dans ou à partir d'un casier de rayonnage (9) d'un stock de rayonnage (2, 3) avec une plate-forme de levage (22) réglable latéralement à côté du stock de rayonnage (2, 3), avec un dispositif porteur (24) logé sur la plate-forme de levage (22) pour le logement éventuel d'au moins un moyen auxiliaire de chargement (10), qui présente un cadre de base (25) et des coulisseaux de couplage et supérieur (29, 30) réglables au moyen d'au moins un entraînement de coulissement (32) dans le sens de rentrée et de sortie (27, 28) de façon synchrone et par rapport au cadre de base (25), **caractérisé en ce que** le dispositif de réception de charge présente au moins un moyen de transport (32) logé sur le coulisseau supérieur (30), en particulier une bande transporteuse, pour le transport du moyen auxiliaire de chargement (10) au moyen d'une liaison à friction, lequel moyen de transport (32) est couplé à un entraînement de moyen de transport (52), qui comprend deux commandes de moyen de traction, dont un premier moyen de traction (75) est guidé à partir de la première commande de moyen de traction de façon périphérique par une roue d'incrément (77) logée sur le cadre de base (25) et pouvant être entraînée par un moteur de transport (31) au moyen de deux galets de renvoi (78) logés des deux côtés sur le cadre de base (25) et de deux galets de renvoi (79) logés sur les extrémités du coulisseau de couplage (29) et un second moyen de traction (76) étant renvoyé par la seconde commande de moyen de traction sur deux galets de renvoi (50) logés sur le coulisseau supérieur (30) et étant couplé au niveau du mouvement au coulisseau de couplage (29), et le cadre de base (25), le coulisseau de couplage et le coulisseau supérieur (29, 30) étant réalisés respectivement avec une longueur à peu près identique et étant guidés les uns vers les autres et une longueur de sortie (63) maximale du coulisseau supérieur (30) sorti entre les faces frontales, avant dans le sens de sortie (28), du cadre de base (25) et le coulisseau supérieur (30) étant plus faible que la longueur du cadre de base (25) et étant limité par une zone de chevauchement (64) résultant du renvoi des moyens de traction (75, 76) sur les galets de renvoi (50, 79) entre des faces frontales (65, 66) opposées du cadre de base (25) et du coulisseau supérieur (30), au moins deux positions en profondeur disposées l'une derrière l'autre pouvant être atteintes pour les moyens auxiliaires de chargement (10) dans le casier de rayonnage (9) du stock de rayonnage (2, 3) au moyen du coulisseau supérieur (29, 30) dans le sens de sortie (28), et l'entraînement du moyen de transport et du coulissement (52, 62) présentant des moteurs (31, 26) pouvant être actionnés séparément et fixés sur la plate-forme de levage (22) et le second moyen de traction (76) étant guidé par la seconde commande du moyen de traction pour l'entraînement du moyen de transport (52) de façon périphérique autour d'un premier galet de renvoi (50), logé sur le coulisseau supérieur (30) et pouvant être entraîné par le premier moyen de traction (75), et autour d'un second galet de renvoi (50) logé sur une extrémité du coulisseau supérieur (30), et le moyen de transport (32) pouvant être actionné au moyen du second moyen de traction (76) et du second galet de renvoi (50) et l'entraînement de coulissement (32) comprenant au moins une commande de moyen de traction couplée au moteur de coulissement (26) et disposée séparément des commandes du moyen de traction pour l'entraînement du moyen de transport (52) et au moyen d'un entraînement de déplacement (67) et un dispositif de guidage linéaire (68) agencé parallèlement au sens d'entrée ou de sortie (27, 28) étant disposé entre le dispositif porteur (24), en particulier le cadre de base (25), et la plate-forme de levage (22), et le dispositif porteur (24) étant guidé le long du dispositif de guidage linéaire (68) et pouvant être déplacé au moyen de l'entraînement de déplacement (67) dans le sens d'entrée ou de sortie (27, 28) d'environ la longueur de la zone de chevauchement (64), de telle sorte que le moyen de transport (32) peut être sorti jusqu'à au moins une face frontale (109) arrière, vue dans le sens de sortie (28), d'un moyen auxiliaire de chargement déposé dans le casier de rayonnage (9) et le moyen auxiliaire de chargement (10) passant dessous complètement sur son côté inférieur dans le sens d'entrée ou de sortie (27, 28).

2. Dispositif de réception de charge selon la revendication 1, **caractérisé en ce que** l'entraînement de déplacement (67) est réalisée séparément de l'entraînement de coulissement (62) et présente un entraînement linéaire actionné de façon pneumatique, hydraulique ou électrique.

3. Dispositif de réception de charge selon la revendication 2, **caractérisé en ce que** l'entraînement linéaire présente le dispositif de guidage linéaire (68).

4. Dispositif de réception de charge selon la revendication 2, **caractérisé en ce que** l'entraînement linéaire présente un moteur de déplacement (99) et **en ce que** le moteur de coulissement, le moteur de transport et/ou le moteur de déplacement (26, 31, 99) de l'entraînement de coulissement, de l'entraînement du moyen de transport et/ou de l'entraînement de déplacement (62, 52, 67) sont synchronisés.

5. Dispositif de réception de charge selon la revendication 1, **caractérisé en ce que** l'entraînement de déplacement (67) est formé par l'entraînement de coulissement (62).

6. Dispositif de réception de charge selon la revendication 5, **caractérisé en ce que** l'entraînement du coulissement (62) présente une première roue d'entraînement (88), disposé sur le cadre de base (25) et couplé au moteur de coulissement (26) disposé de façon fixe sur la plate-forme de levage (22) et un premier moyen de transmission, disposé entre le cadre de base (25) et la plate de forme de levage (22) et s'engageant ou s'appuyant dans la première roue d'entraînement (88).

7. Dispositif de réception de charge selon la revendication 6, **caractérisé en ce que** la première roue d'entraînement (88) est formée par une roue dentée ou un disque denté et le premier moyen de transmission est formé par une crémaillère (103) fixée sur la plate-forme de levage (22) parallèlement au sens d'entrée ou de sortie (27, 28) ou une chaîne tendue linéairement ou une courroie crantée.

8. Dispositif de réception de charge selon la revendication 6, **caractérisé en ce que** la première roue d'entraînement (88) est formée par une roue à frottement et le premier moyen de transmission est formée par une surface de frottement disposée sur la plate-forme de levage (22) parallèlement au sens d'entrée ou de sortie (27, 28).

9. Dispositif de réception de charge selon la revendication 6, **caractérisé en ce que** le premier moyen de transmission est formé par un premier moyen de traction (87), qui est guidé par la première roue d'entraînement (88) au moyen de deux galets de renvoi (89) disposés de façon fixe sur le cadre de base (25) et les deux extrémités (85) du premier moyen de traction (87) sont reliées de façon fixe en des points de fixation (93) à la plate-forme de levage (22).

10. Dispositif de réception de charge selon la revendication 1, 5 ou 6, **caractérisé en ce que** l'entraînement de coulissement (62) présente une seconde roue d'entraînement (91), logée sur le cadre de base (25) et couplée au même moteur de coulissement (26) ainsi qu'un second moyen de transmission, disposé entre le cadre de base (25) et le coulisseau de couplage (29) et s'engageant ou s'appliquant dans la seconde roue d'entraînement (91).

11. Dispositif de réception de charge selon la revendication 10, **caractérisé en ce que** la seconde roue d'entraînement (91) est formée par une roue dentée ou un disque denté et le second moyen de transmission par une crémaillère (104) fixée sur le coulisseau de couplage (29) parallèlement au sens d'entrée ou de sortie (27, 28) ou une chaîne tendue linéairement ou une courroie crantée.

12. Dispositif de réception de charge selon la revendication 10, **caractérisé en ce que** la seconde roue d'entraînement (91) est formée par une roue de frottement et le second moyen de transmission par une surface de frottement disposée sur le coulisseau de couplage (29) parallèlement au sens d'entrée ou de sortie (27, 28).

13. Dispositif de réception de charge selon la revendication 10, **caractérisé en ce que** le second moyen de transmission est formé par un second moyen de traction (90), qui est relié de façon guidée par la seconde roue d'entraînement (91) au moyen de deux galets de renvoi (92) disposés à peu près au centre sur le cadre de base (25) vers des points de fixation (93) disposés dans le sens de sortie (28) du dispositif porteur (24) télescopique sur les extrémités du coulisseau de couplage (29) et les deux extrémités (86) du second moyen de traction (90) sont reliées de façon fixe au coulisseau de couplage (29).

14. Dispositif de réception de charge selon la revendication 5, **caractérisé en ce que** l'entraînement de coulissement (62) présente un troisième moyen de traction (94), qui est guidé de façon continue et périphérique autour de deux galets de renvoi (95) logés dans le sens de sortie (28) du dispositif porteur (24) télescopique sur les extrémités du coulisseau de couplage (29) et le coulisseau de couplage (29) est relié mécaniquement au niveau du mouvement par un premier organe d'entraînement (96) au cadre de base (25) et le coulisseau supérieur (30) par un autre organe d'entraînement (97) au coulisseau de couplage (29), le premier organe d'entraînement (96) étant fixé sur un brin inférieur, tourné vers le cadre de base (25), du troisième moyen de traction (94) et sur un cadre du cadre de base (25) et l'autre organe d'entraînement (97) sur un brin supérieur, tourné vers le coulisseau supérieur (30) et un cadre du coulisseau supérieur (30).

15. Dispositif de réception de charge selon l'une quelconque des revendications 6 à 13, **caractérisé en ce que** les roues d'entraînement (88, 91) forment un engrenage de transmission et sont disposées sur un arbre d'entraînement commun et **en ce que** l'arbre d'entraînement est couplé par un élément de transmission de mouvement de rotation (84), en particulier un arbre de cardan, au moteur de coulissement (26) disposé de fixe sur la plate-forme de levage (22).

16. Dispositif de réception de charge selon la revendication 1, **caractérisé en ce que** le cadre de base (25) du dispositif porteur (24) est disposé sur la plate-forme de levage (22) et est formé, coulissant sur à peu près la longueur de la zone de chevauchement (64), par rapport à la plate-forme de levage (22) vers les deux directions jusqu'au-delà des délimitations latérales (72), opposées entre elles, de la plate-forme de levage (22).

17. Dispositif de réception de charge selon la revendication 1 ou 16, **caractérisé en ce qu'**une course de déplacement (73) du cadre de base (25) correspond parallèlement au sens d'entrée ou de sortie (27, 28) au moins à la longueur de la zone de chevauchement (64) et représente environ entre 130 mm et 250 mm, en particulier 150 mm et 200 mm, par exemple 170 mm.

18. Dispositif de réception de charge selon la revendication 1, **caractérisé en ce que** le dispositif de guidage linéaire (68) présente au moins un montant de guidage (69) agencé dans le sens d'entrée ou de sortie (27, 28) et fixé de façon fixe sur la plate-forme de levage (22) et au moins un coulisseau (70) fixé sur le cadre de base (25), le dispositif porteur (24) étant logé par le coulisseau (70) sur le montant de guidage (69).

19. Procédé, en particulier pour le stockage et le déstockage de moyens auxiliaires de chargement (10) dans ou à partir d'un casier de rayonnage (9) d'un stock de rayonnage (2, 3) au moyen d'un dispositif de réception de charge (23) disposé sur une plate-forme de levage (22) réglable et présentant un dispositif porteur (24) avec un cadre de base (25) et des coulisseaux de couplage et supérieur réglables dans le sens d'entrée ou de sortie (27, 28) de façon synchrone et par rapport au cadre de base (25) ainsi qu'avec au moins un moyen de transport (32) pouvant être entraîné et disposé sur le coulisseau supérieur (30), selon l'une quelconque des revendications 1 à 18, dans lequel, pour le déstockage des coulisseaux supérieurs (29, 30) avec le moyen de transport (32) périphérique, entraîné par des moyens de traction (75, 76), du dispositif porteur (24) positionné avant le casier de rayonnage (9), au moins un moyen auxiliaire de chargement (10) déposé sur une surface de rangement (35) dans le casier de rayonnage (9) sort dans le sens de sortie (28) jusqu'au maximum une longueur de sortie (63) délimitée par une zone de chevauchement (64) résultant de la déviation des moyens de traction (75, 76) sur des galets de renvoi (50, 79) entre des faces avant (65, 66) opposées du cadre de base (25) et du coulisseau supérieur (30), le moyen de transport (32) reçoit le moyen auxiliaire de chargement (10) directement du coulisseau supérieur (29, 30) et ensuite le coulisseau supérieur (29,30) recule à nouveau dans le sens d'entrée (27) et dans lequel, pour stocker les coulisseaux supérieurs (29, 30), du dispositif porteur (24) avec le moyen auxiliaire de chargement (10) déposé sur le moyen de transport (32), il sort dans le sens de sortie (28) jusqu'au maximum de la longueur de sortie (63) limitée par la zone de chevauchement (64) résultant de la déviation des moyens de traction (75, 76) sur les galets de renvoi (50, 79) entre des côtés avant (65, 66) opposés du cadre de base (25) et du coulisseau supérieur (30), le moyen de transport (32) remet le moyen auxiliaire de chargement (10) sur la surface de positionnement (35) au casier de rayonnage (9) et ensuite le chariot supérieur (29, 30) recule à nouveau dans le sens d'entrée (27), **caractérisé en ce que**, lors du stockage et du déstockage d'un moyen auxiliaire de chargement (10) vu depuis le chariot supérieur (30) dans le sens de sortie (28), une position en profondeur avant ou arrière est atteinte et un moyen auxiliaire de chargement (10) déposé sur la position de profondeur avant ou arrière est réceptionné par le moyen de transport (32) périphérique sur le coulisseau supérieur (30) ou bien un moyen auxiliaire de chargement (10) est déposé par le coulisseau supérieur (30) sur le casier de rayonnage (9) sur la position de profondeur avant ou arrière, le mouvement d'entrée et de sortie du chariot supérieur (30) et le mouvement d'avancement étant actionnés séparément par au moins un moyen de transport (32) au moyen de deux moteurs (31, 26) disposés sur la plate-forme de levage (22) et **en ce que** le dispositif porteur (24), en particulier le cadre de base (25), est déplacé en supplément du déplacement d'entrée et de sortie du coulisseau supérieur (30) par rapport à la plate-forme de levage (22) dans le sens d'entrée et de sortie (27, 28) d'à peu près la longueur de la zone de chevauchement (64), de telle sorte que le moyen de transport (32) sort jusqu'à au moins une face avant (109) arrière, vue dans le sens de sortie (28), d'un moyen auxiliaire de chargement (10) déposé dans le casier de rayonnage (9) et le moyen auxiliaire de chargement (10) passant complètement dessous dans le sens d'entrée ou de sortie (27, 28) sur son côté inférieur.

20. Dispositif de transport (11), en particulier appareil de commande de rayonnage, avec une plate-forme de levage (22) déplaçable sensiblement verticalement et horizontalement et au moins un dispositif de réception de charge (23) disposé sur la plate-forme de levage (22), **caractérisé en ce que** le au moins un dispositif de réception de charge (23) est réalisé selon l'une quelconque des revendications 1 à 18.
